# EUROPEAN PATENT APPLICATION

(11) **EP 4 510 639 A1**
(43) Date of publication of application: **19.02.2025**
(21) Application number: 23799197.1
(22) Date of filing: 25.04.2023
(51) Int. Cl.: H04W 4/02, H04W 8/08

(54) **COMMUNICATION METHOD AND COMMUNICATION APPARATUS**

(30) Priority: 05.05.2022 CN 202210483690
(71) Applicant: Huawei Technologies Co., Ltd., Shenzhen, Guangdong 518129 (CN)
(72) Inventor: WEI, Xinpeng, Shenzhen, Guangdong 518129 (CN); ZHU, Fenqin, Shenzhen, Guangdong 518129 (CN)
(74) Representative: Goddar, Heinz J.
(86) International application number: PCT/CN2023/090452
(87) International publication number: WO 2023/213210

(57) **Abstract**

This application provides a communication method and a communication apparatus. In this method, a first core network element may determine second edge application server deployment information based on first edge application server deployment information. The first edge application server deployment information includes a first data network access identifier of a first operator network. The second edge application server deployment information includes a second data network access identifier of a second operator network. In this way, the second data network access identifier in the second edge application server deployment information that may be obtained is used to access data of an edge application server. In other words, even if an edge application server is deployed in the first operator network, a network element of the second operator network may also perform, based on the second edge server deployment information, edge service discovery on the edge application server deployed in the first operator network, so that a possibility of accessing an edge server across operators can be achieved, to help implement service access across operator networks.

## Description

This application claims priority to Chinese Patent Application No. 202210483690.5, filed with the China National Intellectual Property Administration on May 5, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus in the communication field.

### BACKGROUND

An edge application server may be deployed close to a terminal device. In this way, a latency can be reduced in a data transmission process between the terminal device and the edge application server. However, sometimes an edge application server may be deployed in an operator network, and no edge application server is deployed in another operator network. As a result, a terminal device deployed in the another operator network cannot access data of the edge application server, resulting in a limited service.

### SUMMARY

Embodiments of this application provide a communication method and a communication apparatus, to access data of an edge application server across operators, thereby implementing service access across the operators.

According to a first aspect, a communication method is provided. The communication method is applied to a first core network element. The communication method includes: receiving first edge application server deployment information, where the first edge application server deployment information includes a first data network access identifier of a first operator network; and determining second edge application server deployment information based on the first edge application server deployment information, where the second edge application server deployment information includes a second data network access identifier of a second operator network.

In the foregoing solution, the first core network element may determine the second edge application server deployment information based on the first edge application server deployment information, where the first edge application server deployment information includes the first data network access identifier of the first operator network, and the second edge application server deployment information includes the second data network access identifier of the second operator network. In this way, the second data network access identifier in the obtained second edge application server deployment information is used to access data of an edge application server. In other words, even if an edge application server is deployed in the first operator network, a network element of the second operator network may also perform, based on the second edge server deployment information, edge service discovery on the edge application server deployed in the first operator network, so that a possibility of accessing an edge server across operators can be achieved, to help implement service access across the operators.

Optionally, the edge application server is deployed in the first operator network.

Optionally, the edge application server is deployed at an edge part of a data network corresponding to the first data network access identifier of the first operator network.

Optionally, the edge part of the data network may also be referred to as an edge network.

Optionally, the edge application server may also be referred to as an edge service, or may also be referred to as an edge application. In other words, the edge application server, the edge service, and the edge application may be replaced with each other. This is not limited in embodiments of this application.

In some possible implementations, the determining second edge application server deployment information based on the first edge application server deployment information includes: determining the second data network access identifier based on the first data network access identifier.

Optionally, the determining second edge application server deployment information based on the first edge application server deployment information includes: replacing the first data network access identifier in the first edge application server deployment information with the second data network access identifier to obtain the second edge application server deployment information. To be specific, a difference between the first edge application server deployment information and the second edge application server deployment information lies in that the included data network access identifiers are different, and other information included in the first edge application server deployment information may be the same as that included in the second edge application server deployment information. In this way, conversion from the first edge application server deployment information to the second edge application server deployment information can be simplified.

In some possible implementations, the determining second edge application server deployment information based on the first edge application server deployment information includes: determining, based on a correspondence between the first data network access identifier and the second data network access identifier, the second data network access identifier corresponding to the first data network access identifier.

In some possible implementations, the correspondence between the first data network access identifier and the second data network access identifier is configured in the first core network element.

In some possible implementations, the communication method further includes: determining the correspondence between the first data network access identifier and the second data network access identifier based on first identification information.

Optionally, the determining the correspondence between the first data network access identifier and the second data network access identifier based on first identification information includes: determining the correspondence between the first data network access identifier and the second data network access identifier in at least one correspondence based on the first identification information.

Optionally, the at least one correspondence may be a correspondence between a data network access identifier of the second operator network and a data network access identifier of another operator network. The at least one correspondence includes the correspondence between the first data network access identifier and the second data network access identifier.

Optionally, the first identification information identifies the first operator network. The determining the correspondence between the first data network access identifier and the second data network access identifier in at least one correspondence based on the first identification information includes: determining the correspondence between the first data network access identifier and the second data network access identifier in the at least one correspondence based on the first identification information, where the first identification information identifies that the first data network access identifier belongs to the first operator network.

Optionally, the at least one correspondence is configured in the first core network element.

Optionally, the at least one correspondence is configured in another network element, and the first core network element may obtain the correspondence between the first data network access identifier and the second data network access identifier from the another network element.

Optionally, when the at least one correspondence is configured in the another network element, the obtaining the correspondence between the first data network access identifier and the second data network access identifier based on first identification information includes: sending a query message to the another network element, where the query message includes the first identification information, and the first identification information identifies the first operator network; and receiving a response message of the query message from the another network element, where the another network element may determine, in the at least one correspondence based on the first identification information, a correspondence associated with the first operator network, the response message includes the correspondence associated with the first operator network, and the correspondence associated with the first operator network includes the correspondence between the first data network access identifier and the second data network access identifier. The first core network element may determine, in the correspondence associated with the first operator network, the correspondence between the first data network access identifier and the second data network access identifier based on the first data network access identifier included in the first edge application server deployment information.

In some possible implementations, the first identification information is identification information of a public land mobile network PLMN corresponding to the first operator network. In this way, an identifier of the PLMN corresponding to the first operator network may uniquely identify the first operator network. The determining the correspondence between the first data network access identifier and the second data network access identifier in the at least one correspondence based on the first identification information includes: determining the first operator network based on the identification information of the PLMN, determining the first data network access identifier of the first operator network, and determining the correspondence between the first data network access identifier and the second data network access identifier in the at least one correspondence.

In some possible implementations, the first identification information is an identifier of the first operator network. The determining the correspondence between the first data network access identifier and the second data network access identifier in the at least one correspondence based on the first identification information includes: determining the first operator network based on the identifier of the first operator network, determining the first data network access identifier of the first operator network, and determining the correspondence between the first data network access identifier and the second data network access identifier in the at least one correspondence.

In some possible implementations, the first identification information is identification information of an edge computing platform on which an edge application server of the first operator network is located. Identification information of edge computing platforms on which different edge application servers are deployed is different, and the identification information of the edge computing platform may also uniquely identify the first operator network. The determining the correspondence between the first data network access identifier and the second data network access identifier in the at least one correspondence based on the first identification information includes: determining the first operator network based on the identification information of the edge computing platform on which the edge application server is located, determining the first data network access identifier of the first operator network, and determining the correspondence between the first data network access identifier and the second data network access identifier in the at least one correspondence.

In some possible implementations, the first identification information is identification information of a data network corresponding to the edge application server of the first operator network. Data networks of different operator networks are different. Therefore, the identification information of the data network corresponding to the edge server may uniquely identify the first operator network. The determining the correspondence between the first data network access identifier and the second data network access identifier in the at least one correspondence based on the first identification information includes: determining the first operator network based on the identification information of the data network corresponding to the edge application server, determining the first data network access identifier of the first operator network, and determining the correspondence between the first data network access identifier and the second data network access identifier in the at least one correspondence.

In some possible implementations, the first identification information is identification information of an application function service corresponding to the edge application server. The identification information of the application function service is service identification information provided by an AF network element. The AF network element may provide different service identification information for AF network elements of different operator networks. In this way, the identification information of the application function service may identify the first operator network in which the application server is deployed. The determining the correspondence between the first data network access identifier and the second data network access identifier in the at least one correspondence based on the first identification information includes: determining the first operator network based on the identification information of the application function service corresponding to the edge application server, determining the first data network access identifier of the first operator network, and determining the correspondence between the first data network access identifier and the second data network access identifier in the at least one correspondence.

In some possible implementations, the communication method further includes: receiving the first identification information corresponding to the first edge application server deployment information.

Optionally, the receiving the first identification information corresponding to the first edge application server deployment information includes: receiving the first edge application server deployment information, where the first edge application server deployment information includes the first identification information.

Optionally, the receiving the first identification information corresponding to the first edge application server deployment information includes: receiving the first identification information, where the first edge application server deployment information corresponds to the first identification information, and the first edge application server deployment information does not include the first identification information. The first core network element may simultaneously receive the first edge application server deployment information and the first identification information, or may separately receive the first edge application server deployment information and the first identification information. A sequence of receiving the first edge application server deployment information and the first identification information is not limited in this application.

In some possible implementations, the first edge application server deployment information further includes at least one of the following: a first fully qualified domain name FQDN, first address range information of the edge application server, identification information of a first DNS server, and the first identification information.

Optionally, when the first edge application server deployment information may also include the first identification information, in other words, when the first core network element receives the first edge server deployment information, it indicates that the first core network element may also receive the first identification information, and the second edge server deployment information does not include the first identification information.

In some possible implementations, the second edge application server deployment information further includes at least one of the following: the first FQDN, the first address range information, and the identification information of the first DNS server.

Optionally, when the first edge application server deployment information includes the first FQDN, the second edge application server deployment information may also include the first FQDN. When the first edge application server deployment information includes the first address range information of the edge application server, the second edge application server deployment information may also include the first address range information. When the first edge application server deployment information includes the identification information of the first DNS server, the second edge application server deployment information may also include the identification information of the first DNS server.

Optionally, the communication method further includes: obtaining routing information corresponding to the second data network access identifier. Optionally, the obtaining routing information corresponding to the second data network access identifier includes: locally obtaining the routing information corresponding to the second data network access identifier from the first core network element, or includes: obtaining the routing information corresponding to the second data network access identifier from another network element.

Optionally, the routing information corresponding to the second data network access identifier may also be referred to as routing information corresponding to the second edge application server deployment information.

Optionally, there may be one or more pieces of routing information corresponding to the second data network access identifier.

Optionally, the routing information corresponding to the second data network access identifier is N6 traffic routing information corresponding to the second data network access identifier.

Optionally, the routing information corresponding to the second data network access identifier includes a routing profile ID of the second data network access identifier.

Optionally, the routing information corresponding to the second data network access identifier may be understood as routing information corresponding to a data network access point identified by the second data network access identifier of the second operator network. In other words, the routing information corresponding to the second data network access identifier may be understood as routing information of accessing the edge application server through the data network access point corresponding to the second data network access identifier.

Optionally, the obtaining routing information corresponding to the second data network access identifier includes: obtaining, based on first configuration information, the routing information corresponding to the second data network access identifier.

Optionally, the first configuration information is preset configuration information stored in the first core network element.

Optionally, the first configuration information indicates routing information of the data network access identifier that is of the second operator network and that corresponds to the data network access identifier of the another operator network, where the data network access identifier of the second operator network may include the second data network access identifier, and the another operator network includes the first operator network.

Optionally, the obtaining, based on first configuration information, the routing information corresponding to the second data network access identifier includes: obtaining, based on the first configuration information and the first identification information, the routing information corresponding to the second data network access identifier.

Optionally, the obtaining, based on the first configuration information and the first identification information, the routing information corresponding to the second data network access identifier includes: determining, based on the first identification information in the routing information that is indicated by the first configuration information and that is of the data network access identifier that is of the second operator network and that corresponds to the data network access identifier of the another operator network, the routing information corresponding to the second data network access identifier of the second operator network, where the second data network access identifier corresponds to the first data network access identifier of the first operator network identified by the first identification information.

Optionally, the second edge application server may include at least one data network access identifier, and the at least one data network access identifier includes the second data network access identifier. When there are a plurality of data network access identifiers, each data network access identifier has corresponding routing information. In other words, the second edge application server deployment information includes the at least one data network access identifier. When there are the plurality of data network access identifiers, the routing information corresponding to each data network access identifier needs to be obtained. For example, if the second edge application server deployment information includes a DNAI 1, a DNAI 2, and a DNAI 3, the second edge application server deployment information may also include routing information corresponding to the DNAI 1, routing information corresponding to the DNAI 2, and routing information corresponding to the DNAI 3. For another example, if the second edge application server deployment information includes the DNAI 1, the DNAI 2, and the DNAI 3, the first core network element may obtain the routing information corresponding to the DNAI 1, the routing information corresponding to the DNAI 2, and the routing information corresponding to the DNAI 3, and the second edge application server deployment information may not include the routing information corresponding to the DNAI 1, the routing information corresponding to the DNAI 2, and the routing information corresponding to the DNAI 3.

In some possible implementations, the first core network element is a network exposure function network element of the first operator network or a network exposure function network element of the second operator network. The communication method further includes: sending the second edge application server deployment information to a session management function network element of the second operator network and/or a data management network element of the second operator network.

Optionally, if the first core network element is the network exposure function network element of the first operator network, the sending the second edge application server deployment information to a session management function network element of the second operator network and/or a data management network element of the second operator network includes: directly or indirectly sending the second edge application server deployment information to the session management function network element of the second operator network and/or the data management network element of the second operator network. Optionally, the indirectly sending the second edge application server deployment information to the session management function network element of the second operator network and/or the data management network element of the second operator network includes: sending the second edge application server deployment information to the session management function network element of the second operator network and/or the data management network element of the second operator network through the network exposure function network element of the second operator network.

Optionally, the data management network element of the second operator network may be a unified data repository network element of the second operator network or a unified data management network element of the second operator network.

In some possible implementations, the second edge application server deployment information includes the routing information corresponding to the second data network access identifier. To be specific, the second edge application server deployment information includes the second data network access identifier and the routing information corresponding to the second data network access identifier. That the first core network element sends the second edge application server deployment information to the session management function network element of the second operator network and/or the data management network element of the second operator network indicates that the routing information corresponding to the second data network access identifier is also sent.

In some possible implementations, the communication method further includes: sending the routing information corresponding to the second data network access identifier to the session management function network element of the second operator network and/or the data management network element of the second operator network. In this case, the second edge application server deployment information does not include the routing information corresponding to the second data network access identifier, and the second edge application server deployment information has a correspondence with the routing information corresponding to the second data network access identifier. To be specific, when the first core network element separately sends the second edge application server deployment information and the routing information corresponding to the second data network access identifier, the second edge application server deployment information has the correspondence with the routing information corresponding to the second data network access identifier.

Optionally, if the first core network element is the network exposure function network element of the first operator network, the obtaining routing information corresponding to the second data network access identifier includes: The network exposure function network element of the first operator network locally obtains the routing information corresponding to the second data network access identifier or obtains the routing information corresponding to the second data network access identifier from the another network element.

Optionally, if the first core network element is the network exposure function network element of the second operator network, the obtaining routing information corresponding to the second data network access identifier includes: The network exposure function network element of the second operator network locally obtains the routing information corresponding to the second data network access identifier or obtains the routing information corresponding to the second data network access identifier from the another network element.

In some possible implementations, the communication method further includes: The session management function network element of the second operator network receives the second edge application server deployment information, where the second edge application server deployment information includes the routing information corresponding to the second data network access identifier.

In some possible implementations, the communication method further includes: The session management function network element of the second operator network receives the second edge application server deployment information and the routing information corresponding to the second data network access identifier, where the second edge application server deployment information does not include the routing information corresponding to the second data network access identifier.

Optionally, the session management function network element of the second operator network may locally determine the routing information corresponding to the second data network access identifier. To be specific, when the second edge application server deployment information may not include the routing information corresponding to the second data network access identifier or the session management function network element of the second operator network does not receive the routing information corresponding to the second data network access identifier, the session management function network element of the second operator network may locally determine the routing information corresponding to the second data network access identifier. Optionally, that the session management function network element of the second operator network may locally determine the routing information corresponding to the second data network access identifier includes: after the session management function network element of the second operator network receives the second edge application server deployment information, locally determining the routing information that corresponds to the second data network access identifier and that is included in the second edge application server deployment information.

In some possible implementations, the method further includes: The session management function network element of the second operator network obtains an address of an edge application server corresponding to a service accessed by a terminal device. The session management function network element of the second operator network determines the second data network access identifier based on the address of the edge application server. The session management function network element of the second operator network determines, based on the routing information corresponding to the second data network access identifier, a packet processing rule corresponding to the service. The session management function network element of the second operator network sends the packet processing rule to a user plane function network element of the second operator network.

Optionally, the packet processing rule may be a packet detection rule (packet detection rule, PDR) and/or a forwarding action rule (forwarding action rule, FAR).

Optionally, the packet processing rule is used for a service that is for accessing the edge application server.

Optionally, that the session management function network element of the second operator network obtains an address of an edge application server corresponding to a service accessed by a terminal device includes: The session management function network element of the second operator network receives the address of the edge application server from an EASDF network element of the second operator network.

Optionally, the second edge application server deployment information includes the second data network access identifier and the first address range information of the edge application server, and the second data network access identifier corresponds to the first address range information of the edge application server. That the session management function network element of the second operator network determines the second data network access identifier based on the address of the edge application server includes: if the address of the edge application server corresponding to the service accessed by the terminal device is within an address range indicated by the first address range information, determining the second data network access identifier corresponding to the first address range information.

Optionally, the second edge application server deployment information includes one or more second data network access identifiers and address range information that is of an edge application server and that corresponds to each of the one or more second data network access identifiers. If the address of the edge application server corresponding to the service accessed by the terminal device is within an address range indicated by a piece of address range information, the second data network access identifier corresponding to the address range information may be uniquely determined.

In some possible implementations, the first core network element is the session management function network element of the second operator network.

In the foregoing solution, the SMF network element of the second operator network may obtain the second edge application server deployment information.

Optionally, when the first core network element is the session management function network element of the second operator network, the obtaining routing information corresponding to the second data network access identifier includes: locally obtaining the routing information corresponding to the second data network access identifier from the session management function network element, or includes: obtaining the routing information corresponding to the second data network access identifier from the another network element, where for example, the session management function network element obtains the routing information corresponding to the second data network access identifier from the network exposure function network element.

According to a second aspect, a communication method is provided. The communication method is applied to a session management function network element. The communication method includes:
obtaining routing information corresponding to a second data network access identifier;
obtaining an address of an edge application server corresponding to a service accessed by a terminal device;
determining the second data network access identifier based on the address of the edge application server;
determining, based on the routing information corresponding to the second data network access identifier, a packet processing rule corresponding to the service; and
sending the packet processing rule to a user plane function network element.

In the foregoing solution, the session management function network element may determine the second data access network identifier based on the address of the edge application server corresponding to the service accessed by the terminal device, and determine, based on the obtained routing information corresponding to the second data network access identifier, the packet processing rule corresponding to the service. The session management function network element may send the packet processing rule to the user plane function network element. The user plane function network element may route, based on the packet processing rule, data corresponding to the service to the edge application server. Therefore, a method for accessing the service of the edge application server in an edge application service scenario is provided.

Optionally, the packet processing rule may be a PDR and/or an FAR.

Optionally, the packet processing rule is used for a service that is for accessing the edge application server.

Optionally, the routing information corresponding to the second data network access identifier may also be referred to as routing information corresponding to second edge application server deployment information.

Optionally, there may be one or more pieces of routing information corresponding to the second data network access identifier.

Optionally, the routing information corresponding to the second data network access identifier is N6 traffic routing information corresponding to the second data network access identifier.

Optionally, the routing information corresponding to the second data network access identifier includes a routing profile ID of the second data network access identifier.

Optionally, the routing information corresponding to the second data network access identifier may be understood as routing information corresponding to a data network access point identified by the second data network access identifier of a second operator network. In other words, the routing information corresponding to the second data network access identifier may be understood as routing information of accessing the edge application server through the data network access point corresponding to the second data network access identifier.

In some possible implementations, the obtaining routing information corresponding to a second data network access identifier includes: receiving the second edge application server deployment information of the second operator network from a network exposure function network element, where the second edge application server deployment information includes the second data network access identifier, the routing information corresponding to the second data network access identifier, and first address range information corresponding to the second data network access identifier.

The determining the second data network access identifier based on the address of the edge application server includes:
if the address of the edge application server is within an address range indicated by the first address range information, determining the second data network access identifier corresponding to the first address range information.

In the foregoing solution, the session management function network element may receive the second edge application server deployment information from the network exposure function network element, where the routing information corresponding to the second data network access identifier may be sent to the session management function network element as the second edge application server deployment information. The session management function network element may obtain the routing information corresponding to the second data network access identifier from the second edge application server deployment information. If the address of the edge application server is within the address range indicated by the first address range information included in the second edge application server deployment information, the session management function network element may determine the second data network access identifier corresponding to the first address range information. Therefore, a method for determining the second data network access identifier is provided.

In some possible implementations, the obtaining routing information corresponding to a second data network access identifier includes: receiving the routing information corresponding to the second data network access identifier from a network exposure function network element. The communication method further includes:
receiving the second edge application server deployment information of the second operator network from the network exposure function network element, where the second edge application server deployment information includes the second data network access identifier and first address range information corresponding to the second data network access identifier.

The determining the second data network access identifier based on the address of the edge application server includes:
if the address of the edge application server is within an address range indicated by the first address range information, determining the second data network access identifier that corresponds to the first address range information and that is in the second edge application server deployment information.

In the foregoing solution, the session management function network element may receive the second edge application server deployment information and the routing information corresponding to the second data network access identifier from the network exposure function network element. If the address of the edge application server is within the address range indicated by the first address range information included in the second edge application server deployment information, the session management function network element may determine the second data network access identifier corresponding to the first address range information. Therefore, a method for determining the second data network access identifier is provided.

Optionally, the session management function network element may simultaneously receive the routing information corresponding to the second data network access identifier and the second edge application server deployment information from the network exposure function network element, or may separately receive the routing information corresponding to the second data network access identifier and the second edge application server deployment information from the network exposure function network element. A sequence of receiving the routing information corresponding to the second data network access identifier and the second edge application server deployment information is not limited in this embodiment of this application.

Optionally, the session management function network element and the network exposure function network element are network elements of the second operator network. Further, the second data network access identifier is a second data network access identifier of the second operator network.

Optionally, the second data network access identifier is determined based on a first data network access identifier of a first operator network. For a determining method, refer to the descriptions of the first aspect. Details are not described herein again.

Optionally, the session management function network element may be a network element of the second operator network, and the network exposure function network element may be a network element of the first operator network. The receiving the second edge application server deployment information of the second operator network from the network exposure function network element includes: receiving the second edge application server deployment information of the second operator network from the network exposure function network element of the first operator network through a network exposure function network element of the second operator network. The receiving the routing information corresponding to the second data network access identifier from a network exposure function network element includes: receiving the routing information corresponding to the second data network access identifier from the network exposure function network element of the first operator network through the network exposure function network element of the second operator network.

Optionally, the second edge application server deployment information further includes at least one of the following: a first FQDN and identification information of a first DNS server.

Optionally, the obtaining an address of an edge application server corresponding to a service accessed by a terminal device includes: receiving the address of the edge application server corresponding to the service accessed by the terminal device. Optionally, the receiving the address of the edge application server corresponding to the service accessed by the terminal device includes: The session management function network element receives, from an edge application server discovery function network element, the address of the edge application server corresponding to the service accessed by the terminal device.

Optionally, the obtaining routing information corresponding to a second data network access identifier includes: The session management function network element may locally obtain the routing information corresponding to the second data network access identifier.

Optionally, the edge application server is deployed in the first operator network.

Optionally, the user plane function network element routes, according to the packet processing rule, a service that is for accessing the edge application server.

Optionally, the communication method further includes: establishing a PDU session of a data network corresponding to the second data network access identifier.

In some possible implementations, before the obtaining an address of an edge application server corresponding to a service accessed by a terminal device, the communication method further includes: determining client subnet option information based on location information of the terminal device, and sending the client subnet option information, where the client subnet option information is used to determine the address of the edge application server corresponding to the service accessed by the terminal device.

Optionally, the communication method further includes: obtaining the location information of the terminal device.

Optionally, the determining client subnet option information based on location information of the terminal device includes: determining, based on the location information of the terminal device, client subnet option information corresponding to an edge application server that is close to a location of the terminal device.

According to a third aspect, a communication method is provided. The communication method is applied to an application function network element, and includes: sending second edge application server deployment information of a second operator network, where the second edge application server deployment information includes a second data network access identifier and routing information corresponding to the second data network access identifier.

Alternatively, the communication method includes: sending second edge application server deployment information of a second operator network and routing information corresponding to a second data network access identifier, where the second edge application server deployment information includes the second data network access identifier, and the second edge application server deployment information does not include the routing information corresponding to the second data network access identifier. Optionally, the sending second edge application server deployment information and routing information corresponding to a second data network access identifier includes: simultaneously sending the second edge application server deployment information and the routing information corresponding to the second data network access identifier, or separately sending the second edge application server deployment information and the routing information corresponding to the second data network access identifier.

Optionally, an edge application server is deployed in a first operator network.

Optionally, the application function network element may be a network element subscribed to by the first operator network.

Optionally, the communication method further includes: determining the second edge application server deployment information based on a first data network access identifier in first edge application server deployment information, where the second edge application server deployment information includes the second data network access identifier.

Optionally, determining the second edge application server deployment information based on the first edge application server deployment information includes: determining, based on a correspondence between the first data network access identifier and the second data network access identifier, the second data network access identifier corresponding to the first data network access identifier.

Optionally, the correspondence between the first data network access identifier and the second data network access identifier is configured in the application function network element.

Optionally, the first edge application server deployment information further includes at least one of the following: a first fully qualified domain name FQDN, first address range information of the edge application server, and identification information of a first domain name system DNS server.

Optionally, the second edge application server deployment information further includes at least one of the following: the first FQDN, the first address range information, and the identification information of the first DNS server.

Optionally, when the first edge application server deployment information includes the first FQDN, the second edge application server deployment information may also include the first FQDN. When the first edge application server deployment information includes the first address range information of the edge application server, the second edge application server deployment information may also include the first address range information. When the first edge application server deployment information includes the identification information of the first DNS server, the second edge application server deployment information may also include the identification information of the first DNS server.

Optionally, the sending second edge application server deployment information includes: The application function network element sends the second edge application server deployment information to a network exposure function network element of the first operator network, where the second edge application server deployment information includes the routing information corresponding to the second data network access identifier. In this way, the network exposure function network element of the first operator network may send the second edge application server deployment information to a network exposure function network element of the second operator network.

Optionally, the sending second edge application server deployment information includes: The application function network element sends the second edge application server deployment information to a network exposure function network element of the first operator network, where the second edge application server deployment information does not include the routing information corresponding to the second data network access identifier. The communication method further includes: The application function network element sends the routing information corresponding to the second data network access identifier to the network exposure function network element of the first operator network, where the routing information corresponding to the second data network access identifier has a correspondence with the second edge application server deployment information.

Optionally, the sending second edge application server deployment information includes: The application function network element sends the second edge application server deployment information to a network exposure function network element of the second operator network. The application function network element sends the second edge application server deployment information to the network exposure function network element of the second operator network, where the second edge application server deployment information includes the routing information corresponding to the second data network access identifier.

Optionally, the sending second edge application server deployment information includes: The application function network element sends the second edge application server deployment information to a network exposure function network element of the second operator network, where the second edge application server deployment information does not include the routing information corresponding to the second data network access identifier. The communication method further includes: The application function network element sends the routing information corresponding to the second data network access identifier to the network exposure function network element of the second operator network, where the routing information corresponding to the second data network access identifier has a correspondence with the second edge application server deployment information.

According to a fourth aspect, this application provides a communication apparatus. The communication apparatus has a function of implementing network element behaviors in the foregoing aspects and the possible implementations of the foregoing aspects. The function may be implemented by hardware, or may be implemented by hardware executing corresponding software. The hardware or the software includes one or more modules or units corresponding to the foregoing function, for example, a processing module or unit and a transceiver module or unit.

Optionally, the communication apparatus may be the first core network element in the first aspect, the session management function network element in the second aspect, or the application function network element in the third aspect.

According to a fifth aspect, this application provides a communication apparatus. The communication apparatus includes a processor. The processor is coupled to a memory. The memory is configured to store a computer program or instructions. The processor is configured to execute the computer program or the instructions stored in the memory, to enable the methods in the foregoing aspects and the possible implementations of the foregoing aspects to be performed.

For example, the processor is configured to execute the computer program or the instructions stored in the memory, to enable the communication apparatus to perform the methods in the foregoing aspects and the possible implementations of the foregoing aspects.

Optionally, the communication apparatus includes one or more processors.

Optionally, the communication apparatus may further include the memory coupled to the processor.

Optionally, the communication apparatus may include one or more memories.

Optionally, the memory and the processor may be integrated together or disposed separately.

Optionally, the communication apparatus may further include a transceiver.

Optionally, the communication apparatus may be the first core network element in the first aspect, the session management function network element in the second aspect, or the application function network element in the third aspect.

According to a sixth aspect, this application provides an electronic device, including one or more processors, a memory, and a plurality of application programs. One or more computer programs are stored in the memory. The one or more computer programs include instructions. When the instructions are executed by the electronic device, the one or more processors are enabled to perform the communication method in any one of the foregoing aspects or the possible implementations of the aspects.

According to a seventh aspect, this application provides a computer-readable storage medium, including computer instructions. When the computer instructions are run on an electronic device, the electronic device is enabled to perform the method in any one of the foregoing aspects or the possible implementations of the aspects or the communication method described in any embodiment of this application.

According to an eighth aspect, this application provides a computer program product. When the computer program product runs on an electronic device, the electronic device is enabled to perform the method in any one of the foregoing aspects or the possible implementations of the aspects or the communication method described in any embodiment of this application.

### BRIEF DESCRIPTION OF DRAWINGS

FIG. 1 is a schematic diagram of a system architecture according to an embodiment of this application;
FIG. 2 is a schematic diagram of a system architecture in which an EAS is deployed according to an embodiment of this application;
FIG. 3 is a schematic diagram of an edge application service discovery method according to an embodiment of this application;
FIG. 4 is a schematic diagram of a scenario of federation of different operators according to an embodiment this application;
FIG. 5 is a schematic diagram of a communication method according to an embodiment of this application;
FIG. 6 is a schematic diagram of another communication method according to an embodiment of this application;
FIG. 7 is a schematic diagram of still another communication method according to an embodiment of this application;
FIG. 8 is a schematic diagram of yet another communication method according to an embodiment of this application; and
FIG. 9 is a schematic block diagram of a communication apparatus according to an embodiment this application.

### DESCRIPTION OF EMBODIMENTS

The following describes technical solutions in embodiments of this application with reference to the accompanying drawings in embodiments of this application.

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

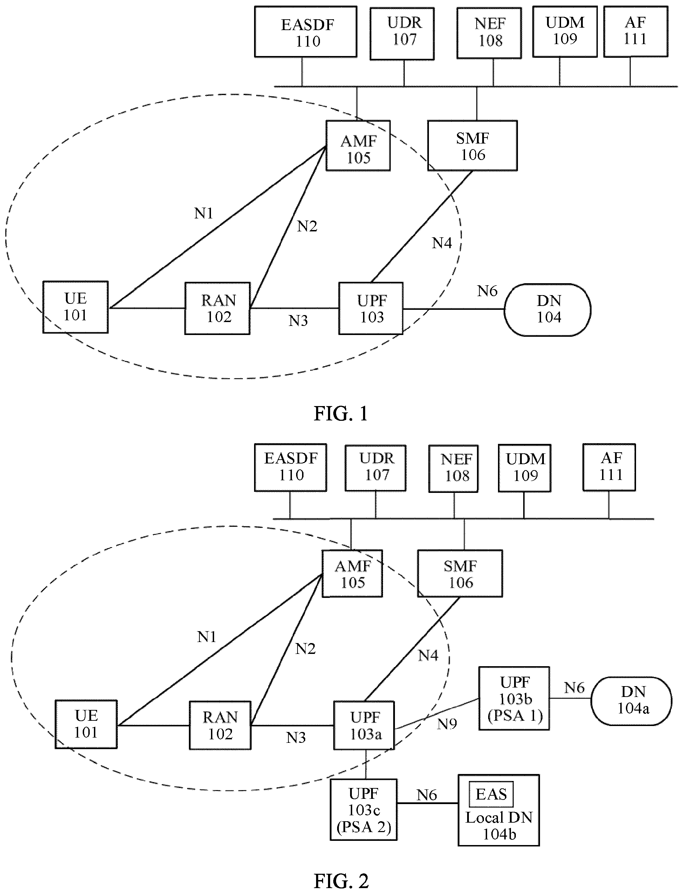

FIG. 1 is a schematic diagram of a system architecture used in an embodiment of this application. As shown in FIG. 1, the system includes at least one of user equipment (user equipment, UE) 101, a radio access network (radio access network, RAN) 102, a user plane function (user plane function, UPF) network element 103, a data network (data network, DN) 104, an access and mobility management function (core access and mobility management function, AMF) 105 in a core network, a session management function (session management function, SMF) network element 106, a unified data repository (unified data repository, UDR) 107, a network exposure function (network exposure function, NEF) 108, a unified data management (unified data management, UDM) 109, an edge application server discovery function (edge application server discovery function, EASDF) 110, or an application function (application function, AF) 111.

The UE 101 may also be referred to as a terminal device, a mobile station (mobile station, MS), a mobile terminal (mobile terminal, MT), an access terminal, a subscriber unit, a subscriber station, a remote station, a remote terminal, a mobile device, a user terminal, a terminal, a wireless communication device, a user agent, a user apparatus, or the like.

The UE 101 may be a device that provides voice/data connectivity for a user, for example, a handheld device or a vehicle-mounted device that has a wireless connection function. Currently, examples of some terminal devices include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device that has a wireless communication function, a computing device or another processing device connected to a wireless modem, a vehicle-mounted device, a wearable device, a terminal device in a 5G network, a terminal device in a future evolved public land mobile network (public land mobile network, PLMN), or the like. This is not limited in this application.

The RAN 102 may be a device that communicates with the UE 101. The RAN 102 may also be referred to as an access network device or a radio access network device. The RAN 102 may be a transmission reception point (transmission reception point, TRP), an evolved NodeB (evolved NodeB, eNB or eNodeB) in an LTE system, a home NodeB (for example, a home evolved NodeB, or a home NodeB, HNB), a base band unit (base band unit, BBU), or a radio controller in a cloud radio access network (cloud radio access network, CRAN) scenario. Alternatively, the RAN 102 may be a relay station, an access point, a vehicle-mounted device, a wearable device, a network device in the 5G network, a network device in the future evolved PLMN network, an access point (access point, AP) in a WLAN, or a gNB in an NR system. Alternatively, the RAN 102 may be a metro base station, a micro base station, a pico base station, a femto base station, or the like. This is not limited in this application.

In a network structure, the RAN 102 may include a central unit (central unit, CU) node, a distributed unit (distributed unit, DU) node, a radio access network (radio access network, RAN) device including the CU node and the DU node, or a device including a control plane CU node (CU-CP node), a user plane CU node (CU-UP node), and the DU node.

The RAN 102 provides a service for a cell. The UE 101 communicates with the cell by using a transmission resource (for example, a frequency domain resource or a spectrum resource) allocated by the RAN 102. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

The UPF 103 is mainly responsible for processing service data, for example, forwarding, and charging.

The DN 104 provides a data transmission service for the UE 101, and may be a public data network (public data network, PDN), for example, the Internet (internet).

The AMF 105 is mainly configured for attachment, mobility management, and a tracking area update procedure that are of the UE 101 in a mobile network. The access management network element terminates a non-access stratum (non-access stratum, NAS) message, completes registration management, connection management, reachability management, tracking area list (tracking area list, TA list) allocation, mobility management, and the like, and transparently routes a session management (session management, SM) message to the session management network element.

The SMF 106 is responsible for UPF selection or reselection, IP address allocation, session establishment, modification, and release, and quality of service (quality of service, QoS) control.

The UDR 107 is responsible for storing structured data information, where the data information includes subscription information, policy information, edge application server deployment information, and network data or service data defined in a standard format, for example, an upgrade package.

The NEF 108 is responsible for providing some status information related to a network for an application service.

The UDM 109 is responsible for managing subscription information of the UE 101.

The EASDF 110 is a network element configured to discover an edge application server.

The AF 111 is used as a common network element for interaction between the application service and the 5G network. For example, the AF 111 provides service-related information (a service latency requirement, a bandwidth requirement, and the like) for the 5G network. For another example, the AF 111 provides second edge application server deployment information of a second operator network for the NEF 108.

As shown in FIG. 1, an interface between the UE 101 and the AMF 105 is referred to as an N1 interface, an interface between the RAN 102 and the AMF 105 is referred to as an N2 interface, an interface between the RAN 102 and the UPF 103 is referred to as an N3 interface, an interface between the UPF 103 and the SMF 106 is referred to as an N4 interface, and an interface between the UPF 103 and the DN 104 is referred to as an N6 interface.

It should be noted that names of network elements (such as the UE 101, the RAN 102, the UPF 103, the DN 104, the AMF 105, the SMF 106, the UDR 107, the NEF 108, the UDM 109, the EASDF 110, and the AF 111) included in FIG. 1 are merely names, and the names do not constitute a limitation on functions of the network elements. In the 5G network and another future network, the foregoing network elements may alternatively have other names. This is not specifically limited in embodiments of this application. For example, in a 6G network, some or all of the foregoing network elements may still use terms in 5G, or may have other names. A general description is provided herein. Details are not described again below.

It should be noted that the network elements in FIG. 1 do not need to simultaneously exist. Required network elements may be determined based on a requirement, and more or fewer network elements than those in FIG. 1 may be included. A connection relationship between the network elements in FIG. 1 is not uniquely determined, and may be adjusted based on a requirement.

In some scenarios, an edge application server (edge application server, EAS) may be deployed in a local data network (data network, DN), and the EAS may provide a near-distance computing resource for a terminal device, so that a network transmission latency of accessing the computing resource by the terminal device can be reduced. The EAS may be deployed in the local (local) DN. Alternatively, the local DN is referred to as a local part of DN (local part of DN). A UPF network element that is close to the local DN may be selected to establish a transmission path for UE, and the UE may access the computing resource in the EAS through the established transmission path. One local DN may correspond to a data network access identifier (data network access identifier, DNAI). For example, as shown in FIG. 2, the EAS may be deployed in a local DN 104b. A UPF 103c that is close to the local DN 104b may establish a transmission path for the UE 101. The UE 101 may access, through the transmission path, a computing resource of the EAS deployed in the local DN 104b. In this way, time for the UE 101 to access the computing resource of the EAS can be reduced. This helps reduce a transmission latency. A UPF 103b and the UPF 103c are configured to allocate different IP addresses to different networks. The UPF 103b may also be referred to as a PDU session anchor (PDU session anchor, PSA) 1, and the UPF 103c may also be referred to as a PSA 2. A UPF 103a is responsible for routing data, and the UPF 103a may also be referred to as an uplink classifier (uplink classifier, ULCL) or a branch point (branch point, BP).

For ease of description, numbers of the network elements are omitted below. For example, the "UE 101" may be "UE", and the "EASDF 110" may be an "EASDF".

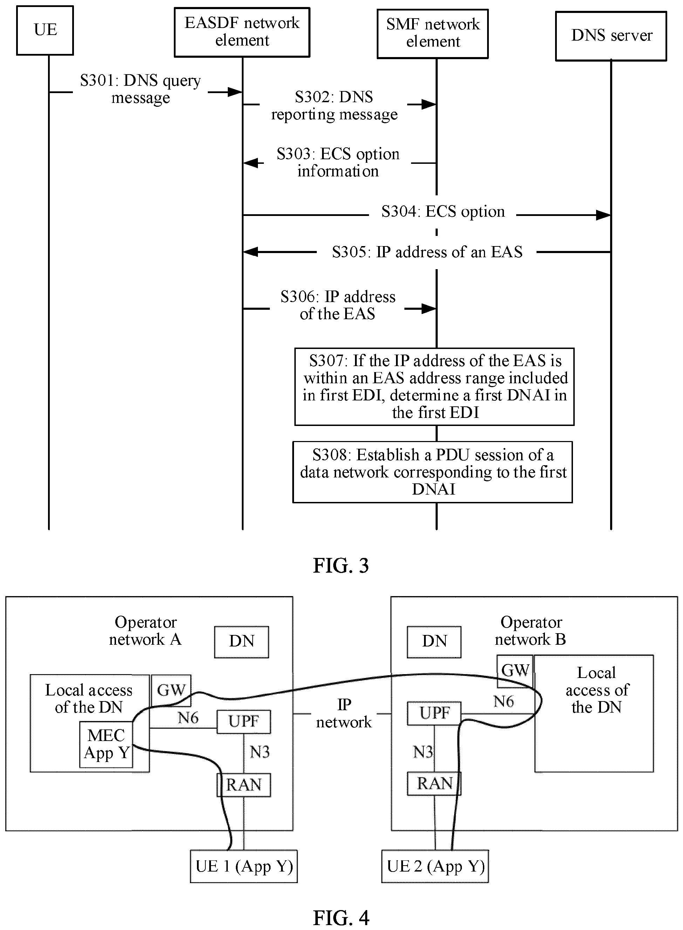

The following describes, with reference to FIG. 3, a process in which the UE 101 performs edge service discovery.

As shown in FIG. 3, the edge service discovery process includes the following steps.

S301: The UE sends a domain name system (domain name system, DNS) query (query) message to an EASDF network element, where the DNS query message includes a fully qualified domain name (fully qualified domain name, FQDN).

Optionally, the FQDN identifies a service of the UE.

Optionally, the DNS query message may further include location information of the UE. The location information of the UE indicates a location of the UE.

S302: The EASDF network element sends a DNS reporting message to an SMF network element, where the DNS reporting message includes the FQDN carried in the DNS query message in S301.

S303: The SMF network element sends client subnet (EDNS client subnet, ECS) option (option) information to the EASDF network element.

EDNS is short for extension for DNS (extension for DNS).

Optionally, the SMF network element determines the ECS option information based on the location of the UE.

S304: The EASDF network element sends an ECS option to a DNS server.

Optionally, the EASDF network element may generate the ECS option based on the ECS option information.

S305: The DNS server sends, to the EASDF network element, an IP address of an EAS determined based on the ECS option.

Optionally, the DNS server may store IP addresses of one or more EASs. After receiving the ECS option, the DNS server determines an IP address of an EAS that is close to the location of the UE indicated by the ECS option.

The IP address of the EAS determined in S305 may be an address of an EAS corresponding to a service accessed by the UE.

S306: The EASDF network element sends the IP address of the EAS to the SMF network element.

S307: If the IP address of the EAS is within an EAS address range included in first edge application server deployment information (EAS deployment information, EDI), the SMF network element determines a first data network access identifier (data network access identifier, DNAI) in the first EDI.

The first EDI includes at least one of first address range information, the first DNAI, a first FQDN, and identification information of a first DNS server.

Optionally, the first address range information, the first DNAI, the first FQDN, and the identification information of the first DNS server correspond to each other.

Optionally, an address range indicated by the first address range information is an address of a first EAS. The first EAS is one or more edge application servers deployed in a first operator network. A data network access point identified by the first DNAI is used to access the first EAS. The first FQDN is service information of the first EAS. The first DNS server is used to query for the address of the first EAS.

Optionally, if the first EDI includes the first FQDN, S307 further includes: The SMF network element determines whether the FQDN in the DNS query message is the first FQDN in the first EDI. If the FQDN in the DNS query message is the first FQDN in the first EDI, and the IP address of the EAS is within the address range indicated by the first address range information that is of the EAS and that is included in the first EDI, the SMF network element determines the first DNAI in the first EDI.

S308: The SMF network element establishes a protocol data unit (protocol data unit, PDU) session of a data network corresponding to the first DNAI.

The established PDU session corresponding to the first DNAI is used to access an EAS of a local DN, for example, used to access the EAS of the local DN 104b in FIG. 2.

It may be understood that the UE, the EASDF network element, and the SMF network element in FIG. 3 all belong to the first operator network.

The foregoing embodiment in FIG. 3 is the edge application service discovery process. The UE may access the computing resource in the edge application server by using the established PDU session. The foregoing edge application server corresponding to the edge application service is deployed in an operator network. In other words, the UE, the EASDF network element, and the SMF network element in FIG. 3 belong to the first operator network, and the edge application server is deployed in the first operator network, for example, deployed in a local DN of the first operator network. In some scenarios, an edge application server is deployed in an operator network, and no edge application server is deployed in another operator network. A terminal device of the operator network in which no edge application server is deployed may fail to access a computing resource of the edge application server. To enable the operator network in which no edge application server is deployed to access the computing resource of the edge application server, a federation mechanism is proposed. Different operator networks may sign a federation agreement, and the operator network in which no edge application server is deployed may access, based on the federation agreement, a computing resource of an edge server deployed in another operator network. For example, as shown in FIG. 4, an edge application server of an application Y (application Y, App Y) is deployed in a local DN of an operator network A, the edge application server of the application Y (application Y, App Y) is a multi-access edge computing (multi-access edge computing, MEC) App Y in FIG. 4, and no MEC App Y is locally deployed in an operator network B. UE 1 that accesses a service corresponding to the App Y is UE that accesses the operator network A, and UE 2 that accesses the service corresponding to the App Y is UE that accesses the operator network B. The UE 1 in FIG. 4 may access the MEC App Y deployed in the local DN of the operator network A. However, because no MEC App Y is deployed in a local DN of the operator network B, the UE 2 cannot directly access the MEC App Y in the operator network B. In a federation mechanism between the operator network A and the operator network B, the UE 2 may access, through the operator network B, the MEC App Y deployed in the local DN of the operator network A.

Alternatively, in FIG. 4, an edge application server may be deployed in the local DN of the operator network B, but no edge application server corresponding to the App Y is deployed. Therefore, the UE 2 also accesses, through the operator network B, the MEC App Y deployed in the local DN of the operator network A. In other words, in the federation mechanism, some edge application servers may alternatively be deployed in the operator network B. However, an edge application server accessed by the UE 2 of the operator network B is not deployed in the local DN of the operator network B, but is deployed in the local DN of the operator network A. In this case, the UE 2 of the operator network B may access, through the operator network B, the MEC App Y deployed in the local DN of the operator network A.

It can be learned from FIG. 3 that, in the edge service discovery process, the UE of the first operator network needs to perform discovery based on the first EDI of the edge application server deployed in the first operator network. However, for a second operator network in which no edge application server is deployed, because the first EDI cannot be identified, UE of the second operator network cannot access the edge application server deployed in the first operator network, resulting in limited service access. For example, in a scenario in FIG. 4, in a process of performing service discovery for the UE 1, the service discovery needs to be performed based on EDI of the MEC App Y deployed in the operator network A. In the federation mechanism shown in FIG. 4, in a process of performing service discovery for the UE 2, because no MEC App Y is deployed in the operator network B, a network element of the operator network B needs to perform service discovery for the UE 2 based on the EDI of the MEC App Y deployed in the operator network A. However, because the EDI of the MEC App Y belongs to the operator network A, and the operator network B cannot identify the EDI of the MEC App Y, the UE 2 may fail to discover the MEC App Y deployed in the operator network A. As a result, service access of the UE 2 is affected, resulting in limited service access.

For example, the first EDI includes at least one of the first DNAI, the first FQDN, the first address range information, and the identification information of the first DNS server. The first DNAI is a DNAI corresponding to the DN (data network, data network) deployed in the first operator network. In other words, the data network access point identified by the first DNAI is used to access the EAS. The first FQDN indicates service information corresponding to the EAS deployed in the first operator network. The first address range information indicates an address segment of the EAS. If an address of an EAS is within the address range indicated by the first address range information, the first DNAI included in the first EDI may be determined, and the PDU session of the data network corresponding to the first DNAI may be established. The identification information of the first DNS server indicates an identifier of the first DNS server, and the first DNS server is used to query for the address of the EAS. For example, the identifier of the first DNS server is an IP address of the DNS server shown in FIG. 3. For example, in a scenario shown in FIG. 3, after S302, the SMF network element obtains the FQDN in the DNS query message. If the FQDN in the DNS query message is the first FQDN in the first EDI, alternatively, in S303, the SMF network element may send the identification information of the first DNS server in the first EDI to the EASDF network element; alternatively, in S304, the EASDF network element may determine the DNS server shown in FIG. 3 based on the identification information of the first DNS server, and send a request message for requesting the address of the edge application server to the DNS server; alternatively, in S305, the DNS server may return the IP address of the EAS to the EASDF network element; and remaining steps are the same as S307 and S308. In other words, in this case, the DNS server may be a local DNS server, and the IP address that is of the EAS and that is returned by the DNS server to the EASDF network element may be within the address range indicated by the first address range information.

Because the first EDI includes at least one of the first DNAI, the first FQDN, the first address range information, and the identification information of the first DNS server, if an SMF network element of the second operator network performs edge service discovery with the EASDF network element based on the information included in the first EDI, the SMF network element of the second operator network may fail to identify or parse the information in the first EDI. For example, the first DNAI included in the first EDI is an identifier of a data network access point of the local DN of the first operator network. However, the SMF network element of the second operator network cannot identify the first DNAI. As a result, the SMF network element of the second operator network cannot perform edge service discovery for the UE of the second operator network, resulting in the limited service access.

In this embodiment of this application, a first core network element may determine second EDI based on the first EDI, where the first EDI includes the first DNAI of the first operator network, and the second EDI includes a second DNAI of the second operator network. In this way, the second DNAI in the second EDI that may be obtained is used to access the edge application server. In other words, even if an edge application server is deployed in the first operator network, a network element of the second operator network may also perform, based on second edge server deployment information, edge service discovery on the edge application server deployed in the first operator network, so that a possibility of accessing an edge server across operators can be achieved, to help implement service access across the operators.

In this application, the local DN may also be referred to as an edge DN, or an edge part of a DN.

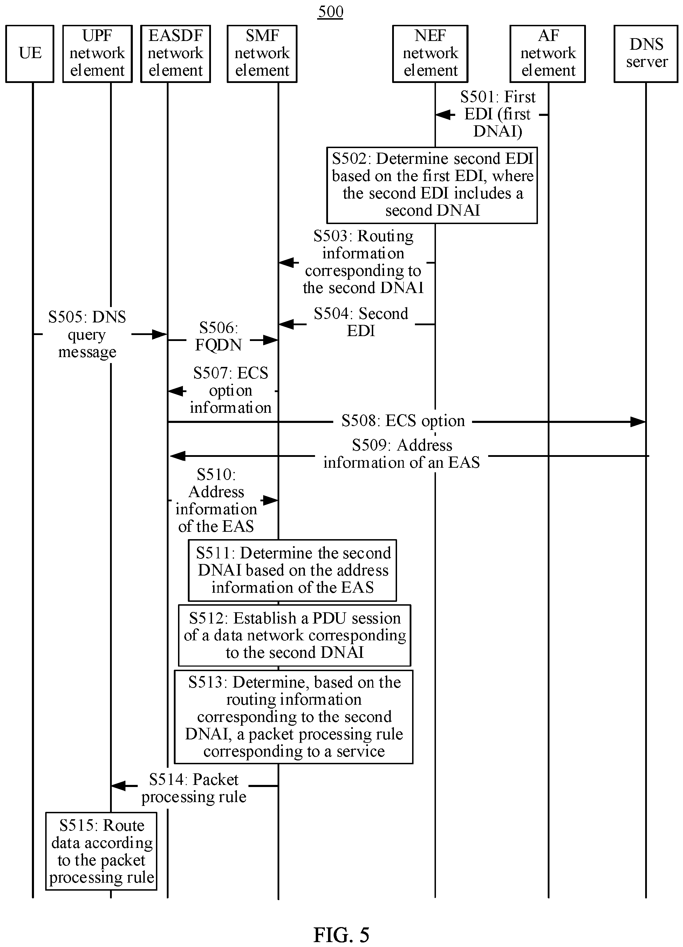

The following describes, with reference to FIG. 5, a communication method 500 provided in an embodiment of this application. In FIG. 5, a first core network element is a NEF network element of a second operator network. As shown in FIG. 5, the communication method 500 includes the following steps.

S501: An AF network element sends first EDI to the NEF network element, and the NEF network element receives the first EDI from the AF network element.

Optionally, an edge application server is deployed in a first operator network. Optionally, the first EDI is EDI of the edge application server deployed in the first operator network.

Optionally, the edge application server is deployed in a local DN of the first operator network. Optionally, the first EDI is EDI of the edge application server deployed in the local DN of the first operator network.

Optionally, the first EDI includes a first DNAI of the first operator network.

When the first EDI includes the first DNAI of the first operator network, optionally, the first EDI may further include routing information corresponding to the first DNAI of the first operator network.

Optionally, the first EDI further includes at least one of the following: a first FQDN, first address range information, identification information of a first DNS server, and first identification information.

An address range indicated by the first address range information is an address of the edge application server. A data network access point identified by the first DNAI is used to access the edge application server deployed in the first operator network. The first FQDN is service information of the edge application server. The first DNS server is used to query for the address of the edge application server.

Optionally, the first EDI may include at least one FQDN, identification information of at least one DNS server, a DNAI corresponding to the identification information of the at least one DNS server, at least one piece of address range information, and a DNAI corresponding to the at least one piece of address range information. The at least one FQDN includes the first FQDN. The at least one piece of address range information includes the first address range information. The identification information of the at least one DNS server includes the identification information of the first DNS server. The DNAI corresponding to the identification information of the at least one DNS server and/or the DNAI corresponding to the at least one piece of address range information include/includes the first DNAI. For example, the first EDI may include: an FQDN 1, an FQDN 2, an FQDN 3, {DNS server 1, DNAI 1}, {DNS server 2, DNAI 2}, {IP range 1, DNAI 2}, and {IP range 2, DNAI 3}. The FQDN 1, the FQDN 2, and the FQDN 3 are three FQDNs included in the first EDI. The DNS server 1 and the DNS server 2 are identification information that is of two DNS servers and that is included in the first EDI. The first EDI further includes the DNAI 1 corresponding to the DNS server 1 and the DNAI 2 corresponding to the DNS server 2. The IP range 1 and the IP range 2 are two pieces of address range information included in the first EDI. The first EDI further includes the DNAI 2 corresponding to the IP range 1 and the DNAI 3 corresponding to the IP range 2. The first DNAI may be the DNAI 1, the DNAI 2, or the DNAI 3.

Optionally, the AF network element may be a network element corresponding to the edge application server deployed in the first operator network.

Optionally, no edge application server is deployed in the second operator network, or no edge application server that has a same service as that deployed in the first operator network is deployed.

Optionally, the edge application server may also be referred to as an edge service, or may also be referred to as an edge application. In other words, the edge application server, the edge service, and the edge application may be replaced with each other. This is not limited in embodiments of this application.

Optionally, the communication method 500 further includes: The AF network element may send the first identification information to the NEF network element, and the NEF network element may receive the first identification information from the AF network element. The first identification information identifies the first operator network. In other words, the first identification information identifies that the first EDI belongs to the first operator network.

Optionally, the AF network element may simultaneously send the first EDI and the first identification information to the NEF network element, or may separately send the first EDI and the first identification information. A sequence of sending the first EDI and the first identification information is not limited in this embodiment of this application.

Optionally, the first EDI may include the first identification information, in other words, the first EDI sent by the AF network element to the NEF network element includes the first identification information. The first identification information identifies the first operator network.

In a possible implementation, the first identification information is identification information of a public land mobile network (public land mobile network, PLMN) corresponding to the first operator. In this way, an identifier of the PLMN corresponding to the first operator network may uniquely identify the first operator network.

In a possible implementation, the first identification information is an identifier of the first operator network.

In a possible implementation, the first identification information is identification information of an edge computing platform on which the edge application server of the first operator network is located. Identification information of edge computing platforms on which different edge application servers are deployed is different, and the identification information of the edge computing platform may also uniquely identify the first operator network.

In a possible implementation, the first identification information is identification information of a data network corresponding to the edge application server of the first operator network. Data networks of different operator networks are different. Therefore, the identification information of the data network corresponding to the edge server may uniquely identify the first operator network.

In a possible implementation, the first identification information is identification information of an application function service corresponding to the edge application server. The identification information of the application function service is service identification information provided by the AF network element. The AF network element may provide different service identification information for AF network elements of different operator networks. In this way, the identification information of the application function service may identify the first operator network in which the application server is deployed.

Optionally, a trigger condition for the AF network element to send the first EDI to the NEF network element is not limited in this embodiment of this application. For example, after obtaining the first EDI, the AF network element may send the first EDI to the NEF network element. Optionally, a trigger condition for the AF network element to send the first identification information to the NEF network element is not limited in this embodiment of this application either.

S502: The NEF network element determines second EDI based on the first EDI, where the second EDI includes a second DNAI of the second operator network.

Optionally, the second EDI further includes at least one of the following: the first FQDN, the first address range information, and the identification information of the first DNS server.

Optionally, when the first EDI includes the first FQDN, the second EDI may also include the first FQDN. When the first EDI includes the first address range information of the edge application server, the second EDI may also include the first address range information. When the first EDI includes the identification information of the first DNS server, the second EDI may also include the identification information of the first DNS server. When the first EDI includes the first identification information, the second EDI does not include the first identification information, or the second EDI includes both the first identification information and second identification information of the second operator. The second identification information identifies the second operator network. In a possible implementation, the second identification information is identification information of a PLMN corresponding to the second operator. In another possible implementation, the second identification information is an identifier of the second operator network.

Specifically, S502 includes: The NEF network element determines the second DNAI based on the first DNAI. In a possible implementation, the NEF network element determines, based on a correspondence between the first DNAI and the second DNAI, the second DNAI corresponding to the first DNAI.

The NEF network element may obtain the correspondence between the first DNAI and the second DNAI in a plurality of different manners. A specific manner is not limited herein.

The following describes two cases in which the NEF network element obtains the correspondence between the first DNAI and the second DNAI.

Case 1: The correspondence between the first DNAI and the second DNAI is configured in the NEF network element.

Optionally, the correspondence between the first DNAI and the second DNAI may be preconfigured in the NEF network element.

Optionally, that the NEF network element determines the second DNAI based on the first DNAI and the correspondence that is between the first DNAI and the second DNAI and that is configured in the NEF network element includes: The NEF network element determines, based on the correspondence between the first DNAI and the second DNAI, the second DNAI corresponding to the first DNAI.

Optionally, at least one correspondence may be preconfigured in the NEF network element, and the at least one correspondence includes the correspondence between the first DNAI and the second DNAI. The at least one correspondence may be a correspondence between a DNAI of the second operator network and a DNAI of another operator network. Optionally, there is one or more correspondences between the second operator network and one operator network. Optionally, correspondences between the second operator network and different operator networks are different. Optionally, there is no intersection between the correspondences between the second operator network and the different operator networks, in other words, correspondences between the second operator network and two different operator networks do not have a same correspondence. For example, three correspondences stored in the NEF network element are respectively that the DNAI 1 corresponds to the DNAI 2, the DNAI 1 corresponds to the DNAI 3, and a DNAI 4 corresponds to a DNAI 5. The DNAI 1 and the DNAI 4 belong to DNAIs of data networks of the second operator network, the DNAI 2 and the DNAI 3 belong to DNAIs of data networks of the first operator network, and the DNAI 5 belongs to a data access point identifier corresponding to a third operator network. Therefore, the NEF network element of the first operator network may store a correspondence between the DNAI of the first operator network and the DNAI of the second operator network, or may store a correspondence between the DNAI of the first operator network and a DNAI of the third operator network. If the first DNAI is the DNAI 2, the second DNAI determined by the NEF network element is the DNAI 1. If the first DNAI is the DNAI 3, the second DNAI determined by the NEF network element is the DNAI 1.

Optionally, the NEF network element determines the correspondence between the first DNAI and the second DNAI based on the first identification information, where the first identification information identifies the first operator network.

Optionally, when there is the at least one correspondence configured in the NEF network element, the NEF network element may determine, in the at least one correspondence based on the first identification information that identifies the first operator network, correspondence configuration information associated with the first operator network. If there is one or more correspondences corresponding to the first operator network, the NEF network element may determine the correspondence between the first DNAI and the second DNAI in the one or more correspondences of the first operator network based on the first DNAI. For example, three existing correspondences are respectively that the DNAI 1 corresponds to the DNAI 2, the DNAI 1 corresponds to the DNAI 3, and the DNAI 4 corresponds to the DNAI 5. The DNAI 1 and the DNAI 4 belong to the DNAIs corresponding to the data networks of the second operator network, the DNAI 2 and the DNAI 3 belong to the DNAIs corresponding to the data networks of the first operator network, the DNAI 5 belongs to the data access point identifier corresponding to the third operator network, and the first identification information identifies the first operator network. In this case, two correspondences that are associated with the first operator network and that are determined by the NEF network element in the three correspondences based on the first operator network identified by the first identification information are respectively that the DNAI 1 corresponds to the DNAI 2, and the DNAI 1 corresponds to the DNAI 3. If the first DNAI is the DNAI 2, the correspondence determined by the NEF network element is that the DNAI 1 corresponds to the DNAI 2. If the first DNAI is the DNAI 3, the correspondence determined by the NEF network element is that the DNAI 1 corresponds to the DNAI 3.

Optionally, when the first identification information is the identification information of the PLMN corresponding to the first operator network, the NEF network element may determine the first operator network based on the identification information of the PLMN, and determine the first DNAI of the first operator network. The NEF network element determines the correspondence between the first DNAI and the second DNAI in the at least one preconfigured correspondence.

Optionally, when the first identification information is the identification information of the edge computing platform on which the edge application server of the first operator network is located, the NEF network element determines the first operator network based on the identification information of the edge computing platform on which the edge application server is located, and determines the first DNAI of the first operator network. The NEF network element determines the correspondence between the first DNAI and the second DNAI in the at least one preconfigured correspondence.

Optionally, when the first identification information is the identification information of the data network corresponding to the edge application server of the first operator network, the NEF network element determines the first operator network based on the identification information of the data network corresponding to the edge application server, and determines the first DNAI of the first operator network. The NEF network element determines the correspondence between the first DNAI and the second DNAI in the at least one preconfigured correspondence.

Optionally, when the first identification information is the identification information of the application function service corresponding to the edge application server of the first operator network, the NEF network element determines the first operator network based on the identification information of the application function service corresponding to the edge application server, and the NEF network element determines the first DNAI of the first operator network. The NEF network element determines the correspondence between the first DNAI and the second DNAI in the at least one preconfigured correspondence.

Case 2: The NEF network element obtains the correspondence between the first DNAI and the second DNAI from another network element based on the first identification information.

In other words, when the correspondence between the first DNAI and the second DNAI is configured in the another network element, the NEF network element may obtain the correspondence between the first DNAI and the second DNAI from the another network element based on the first identification information.

For example, there may be two manners in the case 2.

Manner 1: When at least one correspondence is configured in the another network element, obtaining the correspondence between the first DNAI and the second DNAI based on the first identification information includes: sending a query message to the another network element, where the query message includes the first identification information, and the first identification information identifies the first operator network; and receiving a response message of the query message from the another network element, where the another network element may determine, in the at least one correspondence based on the first identification information, a correspondence associated with the first operator network, the response message includes the correspondence associated with the first operator network, and the correspondence associated with the first operator network includes the correspondence between the first DNAI and the second DNAI. The NEF network element may determine, in the correspondence associated with the first operator network, the correspondence between the first DNAI and the second DNAI based on the first DNAI included in the first EDI.

For example, three correspondences stored in the another network element are respectively that the DNAI 1 corresponds to the DNAI 2, the DNAI 1 corresponds to the DNAI 3, and a DNAI 4 corresponds to a DNAI 5. The DNAI 1 and the DNAI 4 belong to DNAIs corresponding to data networks of the second operator network, the DNAI 2 and the DNAI 3 belong to DNAIs corresponding to data networks of the first operator network, the DNAI 5 belongs to a data access point identifier corresponding to a third operator network, and the first identification information identifies the first operator network. In this case, the query message sent by the NEF network element to the another network element includes the first identification information, and two correspondences that are associated with the first operator network and that are determined by the another network element in the three correspondences based on the first operator network identified by the first identification information are respectively that the DNAI 1 corresponds to the DNAI 2, and the DNAI 1 corresponds to the DNAI 3. The another network element sends the response message to the NEF network element, where the response message includes the two correspondences in which the DNAI 1 corresponds to the DNAI 2, and the DNAI 1 corresponds to the DNAI 3. If the first DNAI is the DNAI 2, the correspondence determined by the NEF network element is that the DNAI 1 corresponds to the DNAI 2, and the second DNAI determined by the NEF network element is the DNAI 1. If the first DNAI is the DNAI 3, the correspondence determined by the NEF network element is that the DNAI 1 corresponds to the DNAI 3, and the second DNAI determined by the NEF network element is the DNAI 1.

Optionally, when the first identification information is the identification information of the PLMN corresponding to the first operator network, the another network element may determine the first operator network based on the identification information of the PLMN, and determine the DNAI of the first operator network. The another network element may send the correspondence associated with the DNAI of the first operator network to the NEF network element through the response message. The NEF network element determines the association relationship between the first DNAI and the second DNAI based on the first DNAI in the correspondence associated with the DNAI of the first operator network.

Optionally, when the first identification information is the identification information of the edge computing platform on which the edge application server of the first operator network is located, the another network element may determine the first operator network based on the identification information of the edge computing platform on which the edge application server is located, and determine the DNAI of the first operator network. The another network element may send the correspondence associated with the DNAI of the first operator network to the NEF network element through the response message. The NEF network element determines the association relationship between the first DNAI and the second DNAI based on the first DNAI in the correspondence associated with the DNAI of the first operator network.

Optionally, when the first identification information is the identification information of the data network corresponding to the edge application server of the first operator network, the another network element may determine the first operator network based on the identification information of the data network corresponding to the edge application server, and determine the DNAI of the first operator network. The another network element may send the correspondence associated with the DNAI of the first operator network to the NEF network element through the response message. The NEF network element determines the association relationship between the first DNAI and the second DNAI based on the first DNAI in the correspondence associated with the DNAI of the first operator network.

Optionally, when the first identification information is the identification information of the application function service corresponding to the edge application server of the first operator network, the another network element may determine the first operator network based on the identification information of the application function service corresponding to the edge application server, and determine the DNAI of the first operator network. The another network element may send the correspondence associated with the DNAI of the first operator network to the NEF network element through the response message. The NEF network element determines the association relationship between the first DNAI and the second DNAI based on the first DNAI in the correspondence associated with the DNAI of the first operator network.

Manner 2: When at least one correspondence is configured in the another network element, obtaining the correspondence between the first DNAI and the second DNAI based on the first identification information includes: sending a query message to the another network element, where the query message includes the first identification information and the first DNAI, and the first identification information identifies the first operator network; and receiving a response message of the query message from the another network element, where the another network element may determine, in the at least one correspondence based on the first identification information, a correspondence associated with the first operator network, the another network element determines the correspondence between the first DNAI and the second DNAI based on the first DNAI in the correspondence associated with the first operator network, and the response message includes the correspondence between the first DNAI and the second DNAI.

For example, three correspondences stored in the another network element are respectively that the DNAI 1 corresponds to the DNAI 2, the DNAI 1 corresponds to the DNAI 3, and a DNAI 4 corresponds to a DNAI 5. The DNAI 1 and the DNAI 4 belong to DNAIs corresponding to data networks of the second operator network, the DNAI 2 and the DNAI 3 belong to DNAIs corresponding to data networks of the first operator network, the DNAI 5 belongs to a data access point identifier corresponding to a third operator network, and the first identification information identifies the first operator network. In this case, the query message sent by the NEF network element to the another network element includes the first identification information and the DNAI 2, where the DNAI 2 is the first DNAI, and two correspondences that are associated with the first operator network and that are determined by the another network element in the three correspondences based on the first operator network identified by the first identification information are respectively that the DNAI 1 corresponds to the DNAI 2, and the DNAI 1 corresponds to the DNAI 3. The another network element determines, in the two correspondences based on the DNAI 2, that the DNAI 1 corresponds to the DNAI 2. If the another network element sends the response message to the NEF network element, where the response message includes that the DNAI 1 corresponds to the DNAI 2, the second DNAI determined by the NEF network element is the DNAI 1.

Optionally, when the first identification information is the identification information of the PLMN corresponding to the first operator network, the another network element may determine the first operator network based on the identification information of the PLMN, and determine the DNAI of the first operator network. The another network element may send the correspondence associated with the DNAI of the first operator network to the NEF network element through the response message. The NEF network element determines the association relationship between the first DNAI and the second DNAI based on the first DNAI in the correspondence associated with the DNAI of the first operator network.

Optionally, when the first identification information is the identification information of the edge computing platform on which the edge application server of the first operator network is located, the another network element may determine the first operator network based on the identification information of the edge computing platform on which the edge application server is located, and determine the DNAI of the first operator network. The another network element may determine the association relationship between the first DNAI and the second DNAI based on the first DNAI in the correspondence associated with the DNAI of the first operator network, and send the determined association relationship between the first DNAI and the second DNAI to the NEF network element through the response message.

Optionally, when the first identification information is the identification information of the data network corresponding to the edge application server of the first operator network, the another network element may determine the first operator network based on the identification information of the data network corresponding to the edge application server, and determine the DNAI of the first operator network. The another network element may determine the association relationship between the first DNAI and the second DNAI based on the first DNAI in the correspondence associated with the DNAI of the first operator network, and send the determined association relationship between the first DNAI and the second DNAI to the NEF network element through the response message.

Optionally, when the first identification information is the identification information of the application function service corresponding to the edge application server of the first operator network, the another network element may determine the first operator network based on the identification information of the application function service corresponding to the edge application server, and determine the DNAI of the first operator network. The another network element may determine the association relationship between the first DNAI and the second DNAI based on the first DNAI in the correspondence associated with the DNAI of the first operator network, and send the determined association relationship between the first DNAI and the second DNAI to the NEF network element through the response message.

Optionally, the another network element in the case 2 is a UDR network element or a UDM network element.

Optionally, after the foregoing case 1 or case 2, the NEF network element replaces the first DNAI in the first EDI with the second DNAI, so that the second EDI may be obtained. To be specific, a difference between the first EDI and the second EDI lies in that the included DNAIs are different, and other information included in the first EDI may be the same as that included in the second EDI. In this way, conversion from the first EDI to the second EDI can be simplified. For example, if the first EDI may include the first DNAI, the first FQDN, the first address range information, and the identification information of the first DNS server, the second EDI may include the second DNAI, the first FQDN, the first address range information, and the identification information of the first DNS server. The DNAI included in the first EDI is different from that in the second EDI, and other information may be the same. In addition, when the first EDI includes the first identification information, the second EDI may not include the first identification information. Except for the DNAI and the first identification information, other information included in the first EDI may be the same as that included in the second EDI. For example, if the first EDI may include the first DNAI, the first FQDN, the first address range information, the identification information of the first DNS server, and the first identification information, the second EDI may include the second DNAI, the first FQDN, the first address range information, and the identification information of the first DNS server.

Optionally, the second EDI may include at least one DNAI, and the at least one DNAI includes the second DNAI, to be specific, the second EDI that may be obtained by the NEF network element based on the first EDI may include the at least one DNAI. In other words, to simplify description, in this embodiment of this application, that the first EDI includes the first DNAI and the second EDI includes the second DNAI is used as an example for description. In actual application, the first EDI may include at least one DNAI, and the second EDI may also include at least one DNAI, in other words, the conversion from the first EDI to the second EDI may be that one or more DNAIs in the first EDI are converted into one or more DNAIs in the second EDI.

Optionally, the communication method 500 may further include the following steps.

S503: The NEF network element may send routing information corresponding to the second DNAI to an SMF network element, and the SMF network element receives the routing information corresponding to the second DNAI from the NEF network element.

Optionally, if the second EDI includes at least one DNAI, in S503, the NEF network element sends, to the SMF network element, routing information corresponding to each of the at least one DNAI, where the at least one DNAI includes the second DNAI. In other words, for DNAIs included in the first EDI, the NEF network element needs to send routing information corresponding to the DNAIs to the SMF network element.

Optionally, the SMF network element may be a network element of the second operator network.

Optionally, after the first operator network and the second operator network sign a federation agreement, the routing information corresponding to the second DNAI may be determined. Therefore, the routing information corresponding to the second DNAI may be stored in the NEF network element.

Optionally, the routing information corresponding to the second DNAI is specifically one or more pieces of routing information corresponding to the second DNAI.

Optionally, the routing information corresponding to the second DNAI is N6 traffic routing information (N6 traffic routing information) corresponding to the second DNAI.

Optionally, the routing information corresponding to the second DNAI includes a routing profile ID (routing profile ID) of the second DNAI. Optionally, the routing profile ID may be the routing profile ID.

Optionally, the routing information corresponding to the second DNAI may be understood as routing information of a data network access point identified by the second DNAI of the second operator network. In other words, the routing information corresponding to the second DNAI of the second operator network may be understood as routing information of accessing the EAS through the data network access point identified by the second DNAI.

Optionally, the NEF network element is a network element of the second operator network, and the NEF network element may obtain the routing information corresponding to the second DNAI of the second operator network from another network element. For example, the another network element may be a NEF network element or an AF network element of the first operator network.

Optionally, the communication method 500 may alternatively not include S503, and the SMF network element may locally store the routing information corresponding to the second DNAI.

Optionally, before S503, the NEF network element may obtain the routing information corresponding to the second DNAI.

Optionally, that the NEF network element may obtain the routing information corresponding to the second DNAI includes: The NEF network element obtains, based on first configuration information, the routing information corresponding to the second DNAI.

Optionally, the first configuration information is preset configuration information stored in the NEF network element.

Optionally, the first configuration information indicates routing information of the DNAI that is of the second operator network and that corresponds to the DNAI of the another operator network, where the DNAI of the second operator network may include the second DNAI in S503, and the another operator network includes the first operator network.

Optionally, that the NEF network element obtains, based on first configuration information, the routing information corresponding to the second DNAI includes: The NEF network element obtains, based on the first configuration information and the first identification information, the routing information corresponding to the second DNAI.

Optionally, that the NEF network element obtains, based on the first configuration information and the first identification information, the routing information corresponding to the second DNAI includes: The NEF network element determines, based on the first identification information in the routing information that is indicated by the first configuration information and that is of the DNAI that is of the second operator network and that corresponds to the DNAI of the another operator network, the routing information corresponding to the second DNAI of the second operator network, where the second DNAI corresponds to the first DNAI of the first operator network identified by the first identification information.

For example, the first configuration information is the routing information of the DNAI that is of the second operator network and that corresponds to the DNAI of the first operator network and the DNAI of the third operator network. For example, the DNAI 1 belongs to the first operator network, the DNAI 2 belongs to the second operator network, and the DNAI 3 belongs to the third operator network. Routing information of the DNAI 2 corresponding to the DNAI 1 is routing information 1, routing information of the DNAI 2 corresponding to the DNAI 3 is routing information 2, and the first DNAI included in the first EDI is the DNAI 1. The NEF network element determines, based on the first operator network identified by the first identification information, the DNAI 2 corresponding to the DNAI 1, where the DNAI 1 is in the first EDI; and replaces the DNAI 1 in the first EDI with the DNAI 2 to obtain the second EDI, where the second EDI includes the DNAI 2. Therefore, the NEF network element determines the routing information 1 of the DNAI 2 corresponding to the DNAI 1 as routing information corresponding to the DNAI 2 in the second EDI.

S504: The NEF network element sends the second EDI to the SMF network element, and the SMF network element receives the second EDI from the NEF network element.

Optionally, the communication method 500 further includes: The NEF network element sends the second EDI to the UDR network element, and the UDR network element stores the second EDI. Alternatively, S503 may not be included, and the SMF network element may obtain the second EDI from the UDR network element. In other words, the NEF network element may directly send the second EDI to the SMF network element, or the NEF network element may send the second EDI to the UDR network element, and the SMF network element may obtain the second EDI from the UDR network element.

Optionally, the UDR network element may be a network element of the second operator network.

Optionally, S504 is performed after S502.

Optionally, the routing information corresponding to the second DNAI in S503 corresponds to the second EDI in S504. Optionally, if the second EDI includes the at least one DNAI, in S503, there may be the routing information corresponding to each of the at least one DNAI. The routing information corresponding to each of the at least one DNAI in S503 has a correspondence with the at least one DNAI included in the second EDI in S504.

Optionally, the NEF network element may separately send the second EDI in S504 and the routing information corresponding to the second DNAI in S503, and the SMF network element may separately receive the second EDI and the routing information corresponding to the second DNAI. The second EDI does not include the routing information corresponding to the second DNAI, and the second EDI has a correspondence with the routing information corresponding to the second DNAI. In other words, when the SMF network element separately receives the second EDI and the routing information corresponding to the second DNAI, the second EDI has the correspondence with the routing information corresponding to the second DNAI. Specifically, that the second EDI has the correspondence with the routing information corresponding to the second DNAI may be that the second DNAI included in the second EDI has a correspondence with the routing information corresponding to the second DNAI. For example, if the second EDI includes the DNAI 1, the NEF network element also needs to receive routing information corresponding to the DNAI 1.

Optionally, when S503 is included, S503 and S504 may be simultaneously performed, or may be separately performed. This is not limited in this embodiment of this application.

Optionally, the routing information corresponding to the second DNAI in S503 may be sent to the SMF network element as a part of the second EDI, in other words, the second EDI may include the second DNAI and the routing information corresponding to the second DNAI. In this case, the second EDI in S504 includes the routing information corresponding to the second DNAI in S503. Therefore, S503 may not be included. In other words, the SMF network element may obtain the routing information corresponding to the second DNAI from the second EDI in S504. A sending manner in which the NEF network element sends the second EDI and the routing information corresponding to the second DNAI is not limited in this embodiment of this application.

It should be noted that a relationship between the first EDI and the second EDI is not limited in this embodiment of this application. The following uses examples to describe, with reference to the foregoing embodiments, content included in the first EDI and the second EDI.

For example, the first EDI may include the first DNAI, the first FQDN, the first address range information, and the identification information of the first DNS server. The second EDI may include the second DNAI, the FQDN, the first address range information, and the identification information of the first DNS server.

For another example, the first EDI may include the first DNAI, the first FQDN, the first address range information, and the identification information of the first DNS server. The second EDI may include the second DNAI, the first FQDN, the first address range information, the identification information of the first DNS server, and the routing information of the second DNAI.

For another example, the first EDI may include the first DNAI, the first FQDN, the first address range information, the identification information of the first DNS server, and the first identification information. The second EDI may include the second DNAI, the first FQDN, the first address range information, the identification information of the first DNS server, and the routing information of the second DNAI.

For another example, the first EDI may include the first DNAI, the first FQDN, the first address range information, the identification information of the first DNS server, and the first identification information. The second EDI may include the second DNAI, the first FQDN, the first address range information, and the identification information of the first DNS server.

According to the foregoing method, the SMF network element of the second operator may obtain a second EDI that can be identified, so that edge service discovery can be performed on the edge application server deployed in the first operator network. The following describes in detail an edge service discovery process.

S505: UE sends a DNS query message to an EASDF network element, where the DNS query message includes an FQDN; and the EASDF network element receives the DNS query message from the UE.

Optionally, the FQDN identifies a service of the UE.

Optionally, the DNS query message may further include location information of the UE, where the location information of the UE indicates a location of the UE.

Optionally, the UE may be UE of the second operator network.

Optionally, the EASDF network element may be a network element of the second operator network.

S506: The EASDF network element sends the FQDN in the DNS query message to the SMF network element, and the SMF network element receives the FQDN in the DNS query message.

Optionally, the SMF network element is a network element of the second operator network.

For example, the EASDF network element sends a DNS reporting message to the SMF network element, where the DNS reporting message includes the FQDN in the DNS query message.

S507: The SMF network element sends ECS option information to the EASDF network element, and the EASDF network element receives the ECS option information from the SMF network element.

Optionally, the SMF network element may determine the ECS option information based on the location of the UE.

Optionally, if the FQDN included in the DNS query message is the first FQDN in the second EDI, the SMF network element performs S507. Otherwise, S507 is not performed.

S508: The EASDF network element sends an ECS option to a DNS server, and the DNS server receives the ECS option from the EASDF network element.

S509: The DNS server sends, to the EASDF network element, address information of an EAS determined based on the ECS option.

Optionally, the address information of the EAS may indicate an address of the EAS. For example, the address of the EAS may be an IP address of the EAS.

The address that is of the EAS and that is indicated by the address information of the EAS may be an address of an EAS corresponding to a service accessed by the UE.

Optionally, the DNS server may store IP addresses of one or more EASs. After receiving the ECS option, the DNS server determines an IP address of an EAS that is close to the location of the UE indicated by the ECS option.

S510: The EASDF network element sends the address information of the EAS to the SMF network element, and the SMF network element receives the address information of the EAS from the EASDF network element.

Optionally, the SMF network element may alternatively obtain the address information of the EAS from another network element or locally. This is not limited in this embodiment of this application.

S511: The SMF network element determines the second DNAI based on the address information of the EAS.

Optionally, S511 includes: If the address that is of the EAS and that is indicated by the address information of the EAS is within the address range indicated by the first address range information included in the second EDI, the SMF network element determines, in the second EDI, the second DNAI corresponding to the first address range information.

In other words, the second EDI may include the first address range information and the second DNAI, where the first address range information corresponds to the second DNAI. If the address of the EAS is within the address range indicated by the first address range information, the SMF network element may determine the second DNAI corresponding to the first address range information.

Optionally, the second EDI further includes the first FQDN.

Optionally, if the second EDI further includes the first FQDN, and the address that is of the EAS and that is indicated by the address information of the EAS is within the address range indicated by the first address range information included in the second EDI, that the SMF network element determines, in the second EDI, the second DNAI corresponding to the first address range information includes: The SMF network element determines whether the FQDN in the DNS query message is the first FQDN in the second EDI. If the FQDN in the DNS query message is the first FQDN in the second EDI, and the address of the EAS is within the address range indicated by the first address range information included in the second EDI, the SMF network element determines the second DNAI in the second edge deployment information.

S512: The SMF network element establishes a PDU session of a data network corresponding to the second DNAI.

The PDU session that is of the data network corresponding to the second DNAI and that is established by the SMF network element is used to send data from the UE to a UPF network element, or is used to send data from the UPF network element to the UE.

S513: The SMF network element determines, based on the routing information corresponding to the second DNAI, a packet processing rule corresponding to the service.

Optionally, the packet processing rule may be a PDR and/or an FAR.

Optionally, the packet processing rule is used to perform data forwarding (routing) on a service that is for accessing the edge application server.

Optionally, the communication method 500 may further include the following steps.

S514: The SMF network element sends the packet processing rule to the UPF network element, and the UPF network element receives the packet processing rule from the SMF network element.

S515: The UPF network element routes data according to the packet processing rule.

The data routed in S515 is data corresponding to the service of the edge application server.

Optionally, S515 includes: The UPF network element performs, according to the packet processing rule, routing on a service that is for accessing the edge application server deployed in the first operator network.

To be specific, in S512, the PDU session that is of the data network corresponding to the second DNAI and that is established by the SMF network element is used for data transmission between the UE and the UPF network element. In S515, routing the data according to the packet processing rule is to transmit the data to the first DNAI of the first operator network.

Optionally, the second DNAI of the second operator network may route the data to the first DNAI of the first operator network, so that the edge application server deployed in the first operator network may be accessed by using the first DNAI. If routing may be directly performed between the second DNAI and the first DNAI, S503, S513, S514, and S515 may not be required. If routing cannot be directly performed between the second DNAI and the first DNAI, the routing information that corresponds to the second DNAI and that is determined in S503, S513, S514, and S515 may be used. The routing information corresponding to the second DNAI may be routing information from an edge part of the data network of the second DNAI to an edge part of the data network of the first DNAI. In other words, the routing information corresponding to the second DNAI can route the data from the edge part of the data network of the second DNAI to the edge part of the data network of the first DNAI.

Optionally, S503, S511, S513, S514, and S515 may form an independent embodiment. The SMF network element may determine the second DNAI based on the address information of the EAS, generate the packet processing rule based on the routing information corresponding to the second DNAI, and send the packet processing rule to the UPF network element. The UPF network element may route the data according to the packet processing rule. Optionally, the second DNAI is a DNAI in the second EDI, and the second EDI may be obtained based on the first EDI. Alternatively, the second EDI may be an EDI that is independent from and not associated with the first EDI. In other words, S503, S511, S513, S514, and S515 may form an independent embodiment, and may not be associated with the first EDI of the first operator network. To be specific, S503, S511, S513, S514, and S515 may form an independent embodiment to implement routing in the second operator network, and routing across operator networks may not be performed.

It should be noted that the UE, the UPF network element, the EASDF network element, the SMF network element, and the NEF network element in FIG. 5 may all belong to the second operator network. To be specific, the UE of the second operator network in which no edge application server is deployed may access, by using the second EDI in the communication method in FIG. 5 in this embodiment of this application, the service of the edge application server deployed in the first operator network, so that accessing the edge application server across the operator networks can be implemented.

It should also be noted that there is no limitation on a sequence of S503 or S504 and S505 to S510.

It should also be noted that the embodiment shown in FIG. 5 may include more or fewer steps. For example, some steps may be optional steps. For example, S505 to S515 are optional, and are procedures performed when a service is initiated on a UE side. S505 to S515 may be performed for a plurality of times. For example, if an edge service query is initiated on the UE side for a plurality of times, for a procedure in which the edge service query is initiated on the UE side, S501 to S504 are optional.

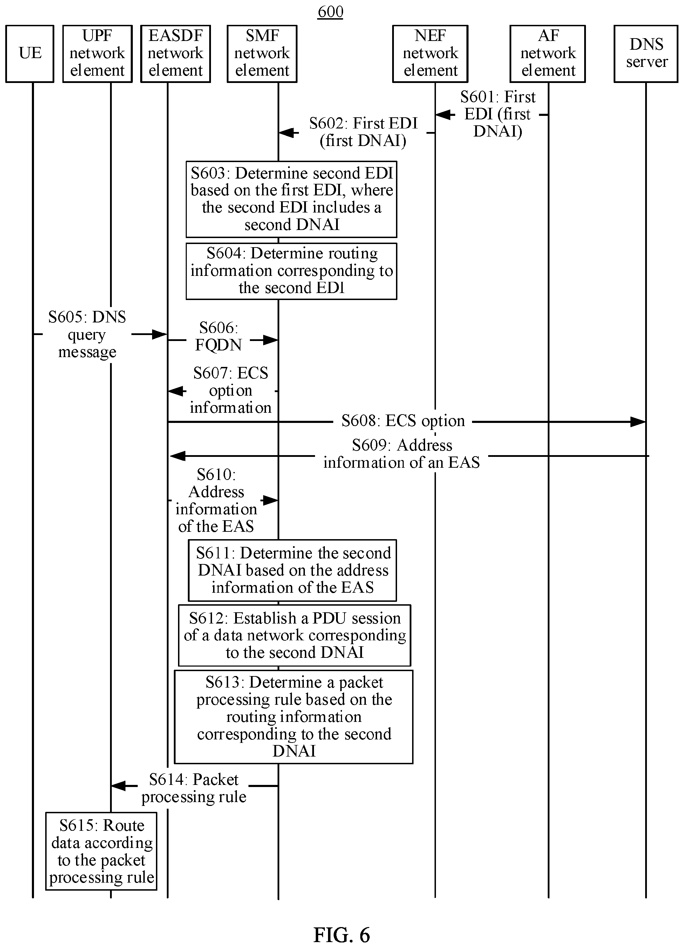

In the method embodiment shown in FIG. 5, the NEF network element of the second operator network determines the second EDI based on the first EDI, and the SMF network element of the second operator network determines the second DNAI, and establishes the PDU session of the data network corresponding to the second DNAI. Optionally, when the routing cannot be directly performed between the second DNAI and the first DNAI, the packet processing rule may be generated based on the routing information corresponding to the second DNAI, and the UPF network element may route the data to the first NDAI according to the packet processing rule, so that the edge application server in the data network corresponding to the first DNAI is accessed by using the first DNAI. The following provides descriptions with reference to FIG. 6. An SMF network element of a second operator network determines second EDI based on first EDI, determines a second DNAI based on the second EDI, and establishes a PDU session of a data network corresponding to the second DNAI. When routing cannot be directly performed between the second DNAI and a first DNAI, a packet processing rule may be generated based on routing information corresponding to the second DNAI, and a UPF network element may route data to the first NDAI according to the packet processing rule, so that an edge application server in a data network corresponding to the first DNAI is accessed by using the first DNAI. As shown in FIG. 6, a first core network element is the SMF network element of the second operator network. A communication method 600 includes the following steps.

S601 is the same as S501.

S602: A NEF network element sends the first EDI to the SMF network element, and the SMF network element receives the first EDI from the NEF network element.

Optionally, if in S501, an AF network element sends first identification information to the NEF network element, the NEF network element may send the first identification information to the SMF network element.

Optionally, the NEF network element may simultaneously send the first EDI and the first identification information to the SMF network element, or may separately send the first EDI and the first identification information. A sequence of sending the first EDI and the first identification information is not limited in this embodiment of this application.

Optionally, the first EDI may include the first identification information. For example, if in S601, the first EDI sent by the AF network element to the NEF network element includes the first identification information, in S602, the first EDI sent by the NEF network element to the SMF network element may also include the first identification information. For another example, if in S601, the AF network element sends the first EDI and the first identification information to the NEF network element, where the first EDI does not include the first identification information, in S602, the NEF network element sends the first EDI and the first identification information to the SMF, where the first EDI does not include the first identification information either.

Optionally, the NEF network element may send the first EDI to a UDR network element, and the SMF network element may obtain the first EDI from the UDR network element. In this case, S602 may not be included, or S602 may be included. This is not limited in this embodiment of this application.

S603: The SMF network element determines the second EDI based on the first EDI, where the second EDI includes the second DNAI of the second operator network.

A manner in which the SMF network element determines the second EDI based on the first EDI is the same as a manner in which the NEF network element determines the second EDI based on the first EDI in the communication method 500. To avoid repetition, details are not described.

S604: The SMF network element determines the routing information corresponding to the second DNAI.

Optionally, if the second EDI includes at least one DNAI, in S604, the SMF network element determines routing information corresponding to each of the at least one DNAI, where the at least one DNAI includes the second DNAI. In other words, for DNAIs included in the first EDI, the SMF network element needs to determine routing information corresponding to the DNAIs.

Optionally, after a first operator network and the second operator network sign a federation agreement, the routing information corresponding to the second DNAI may be determined. Therefore, the routing information corresponding to the second NDAI may be stored in the SMF network element.

Optionally, in S604, the SMF network element may obtain the routing information corresponding to the second DNAI from another network element. For example, the another network element may be a NEF network element of the first operator network.

For descriptions of the routing information corresponding to the second DNAI, refer to the descriptions in S503.

A manner in which the SMF network element determines the routing information corresponding to the second DNAI based on first configuration information is similar to a manner in which the NEF network element determines the routing information corresponding to the second DNAI based on the first configuration information in S503. To avoid repetition, details are not described.

S605 to S615 are respectively the same as S505 to S515.

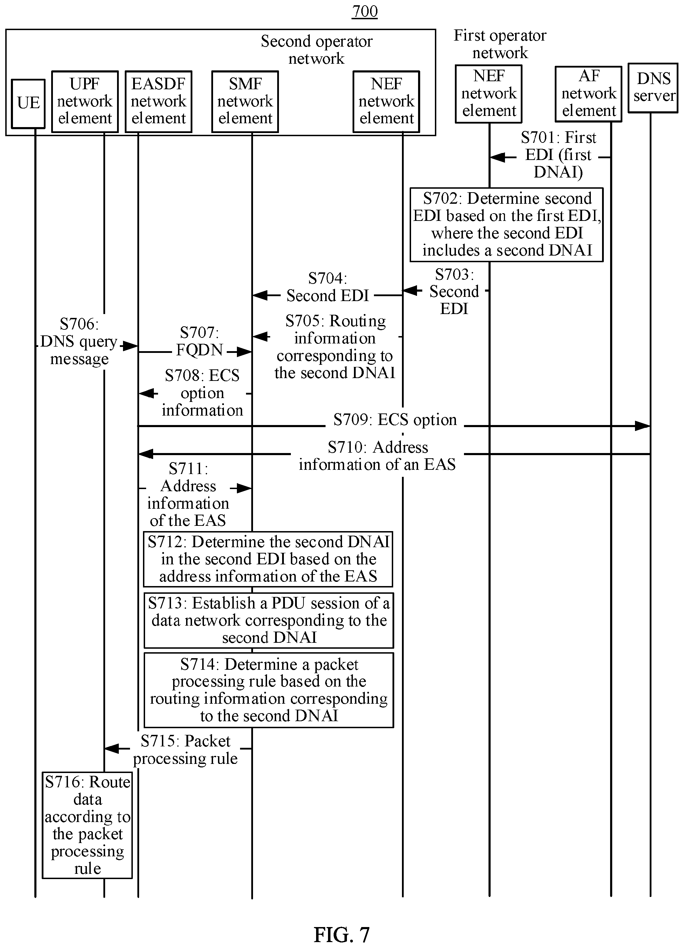

It should be noted that UE, the UPF network element, an EASDF network element, the SMF network element, and the NEF network element in FIG. 6 may all belong to the second operator network. To be specific, the UE of the second operator network in which no edge application server is deployed may access, by using the communication method in FIG. 6 in this embodiment of this application, a service of an edge application server deployed in the first operator network, so that accessing the edge application server across operator networks can be implemented. In some embodiments, the NEF network element of the first operator network may also determine the second EDI based on the first EDI. The following provides descriptions with reference to a communication method 700 shown in FIG. 7. As shown in FIG. 7, a first core network element is a NEF network element of a first operator network. The communication method 700 includes the following steps.

S701: An AF network element sends first EDI to the NEF network element of the first operator network, and the NEF network element of the first operator network receives the first EDI from the AF network element.

For descriptions of the first EDI, refer to S501.

Optionally, the AF network element may be a network element corresponding to the first operator network, that is, the AF network element may be a network element that has subscription information with the first operator network. In this way, the first EDI sent by the AF network element to the NEF network element of the first operator network may be EDI corresponding to the first operator network. In this case, the AF network element may not send first identification information to the NEF network element of the first operator network to identify that the first EDI is the EDI of the first operator network.

S702: The NEF network element of the first operator network determines second EDI based on the first EDI.

The first EDI is the EDI of the first operator network.

Optionally, before S702, S701 may not be included, and the NEF network element of the first operator network may obtain the first EDI from a UDR of the first operator network.

A principle in which the NEF network element of the first operator network determines the second EDI based on the first EDI is the same as a principle in which the NEF network element determines the second EDI based on the first EDI in S502. To avoid repetition, details are not described in this embodiment of this application. For example, the NEF network element of the first operator network may also obtain a correspondence between a first DNAI and a second DNAI according to principles of the case 1 and the case 2 in S502.

It should be noted that the correspondence that is between the first DNAI and the second DNAI and that is used by the NEF network element of the first operator network in a process of determining the second EDI based on the first EDI may be stored in the NEF network element of the first operator network, or may be obtained by the NEF network element of the first operator network from another network element. For example, the NEF network element of the first operator network may obtain the correspondence between the first DNAI and the second DNAI from a NEF network element of a second operator network. For another example, the NEF network element of the first operator network may obtain the correspondence between the first DNAI and the second DNAI from the UDR network element of the first operator network. A manner in which the NEF network element of the first operator network obtains the correspondence between the first DNAI and the second DNAI is not limited in this embodiment of this application.

Optionally, the NEF network element of the first operator network may obtain routing information corresponding to the second DNAI, where the second EDI includes the second DNAI. The second DNAI included in the second EDI has a correspondence with the routing information corresponding to the second DNAI. A manner in which the NEF network element of the first operator network obtains the routing information corresponding to the second DNAI is similar to an obtaining manner of the NEF network element in the communication method 500. To avoid repetition, details are not described.

Optionally, the NEF network element of the first operator network may send the routing information corresponding to the second DNAI to the NEF network element of the second operator network.

S703: The NEF network element of the first operator network sends the second EDI to the NEF network element of the second operator network, and the NEF network element of the second operator network receives the second EDI from the NEF network element of the first operator network.

Optionally, the second EDI in S703 may include the second DNAI and the routing information corresponding to the second DNAI. The NEF network element of the first operator network may send the routing information corresponding to the second DNAI to the NEF network element of the second operator network as a part of the second EDI. In this case, the NEF network element of the first operator network does not need to separately send the routing information corresponding to the second DNAI to the NEF network element of the second operator network.

Optionally, the NEF network element of the first operator network may separately send the second EDI and the routing information corresponding to the second DNAI, and the NEF network element of the second operator network may separately receive the second EDI and the routing information corresponding to the second DNAI. The second EDI does not include the routing information corresponding to the second DNAI, and the second EDI has a correspondence with the routing information corresponding to the second DNAI. In other words, when the NEF network element of the second operator network separately receives the second EDI and the routing information corresponding to the second DNAI, the second EDI has the correspondence with the routing information corresponding to the second DNAI. Specifically, that the second EDI has the correspondence with the routing information corresponding to the second DNAI may be that the second DNAI included in the second EDI has the correspondence with the routing information corresponding to the second DNAI. For example, if the second EDI includes a DNAI 1, the NEF network element of the second operator network also needs to receive routing information corresponding to the DNAI 1.

Optionally, the second EDI may not include the routing information corresponding to the second DNAI. After receiving the second EDI, the NEF network element of the second operator network element may locally determine the routing information corresponding to the second DNAI in the second EDI. For a manner in which the NEF network element of the second operator network element locally determines the routing information corresponding to the second DNAI in the second EDI, refer to a determining manner that is based on the first configuration information in S503. In this scenario, the AF network element may send the first identification information to the NEF network element of the first operator network. The NEF network element of the first operator network may send the first identification information to the NEF network element of the second operator network.

S704: The NEF network element of the second operator network sends the second EDI to an SMF network element of the second operator network, and the SMF network element of the second operator network receives the second EDI from the NEF network element of the second operator network.

Optionally, the NEF network element of the second operator network may send the second EDI to a UDR network element of the second operator network, and the UDR network element of the second operator network may store the second EDI. The SMF network element may obtain the second EDI from the UDR network element. In this case, S704 may not be included, or S704 may be included. This is not limited in this embodiment of this application.

Optionally, if in S703, the routing information corresponding to the second DNAI may be sent to the NEF network element of the second operator network as a part of the second EDI, in S704, the second EDI sent by the NEF network element of the second operator network to the SMF network element of the second operator network may also include the routing information corresponding to the second DNAI. In this case, S705 is not included.

Optionally, if in S703, the NEF network element of the first operator network may separately send the second EDI and the routing information corresponding to the second DNAI, and the NEF network element of the second operator network may separately receive the second EDI and the routing information corresponding to the second DNAI, the second EDI in S704 may not include the routing information corresponding to the second DNAI. In addition, S705 may be included.

S705: The NEF network element of the second operator network sends the routing information corresponding to the second DNAI to the SMF network element of the second operator network, and the SMF network element of the second operator network receives the routing information corresponding to the second DNAI from the NEF network element of the second operator network.

For descriptions of the routing information corresponding to the second DNAI, refer to the descriptions of the communication method 500.

Optionally, the NEF network element of the second operator network may also store the routing information corresponding to the second DNAI. A manner in which the NEF network element of the second operator network determines the routing information corresponding to the second DNAI is similar to that in the communication method 500. Details are not described in this embodiment of this application. In this case, the NEF network element of the first operator network does not send the routing information corresponding to the second DNAI.

S706 to S716 are respectively the same as S505 to S515.

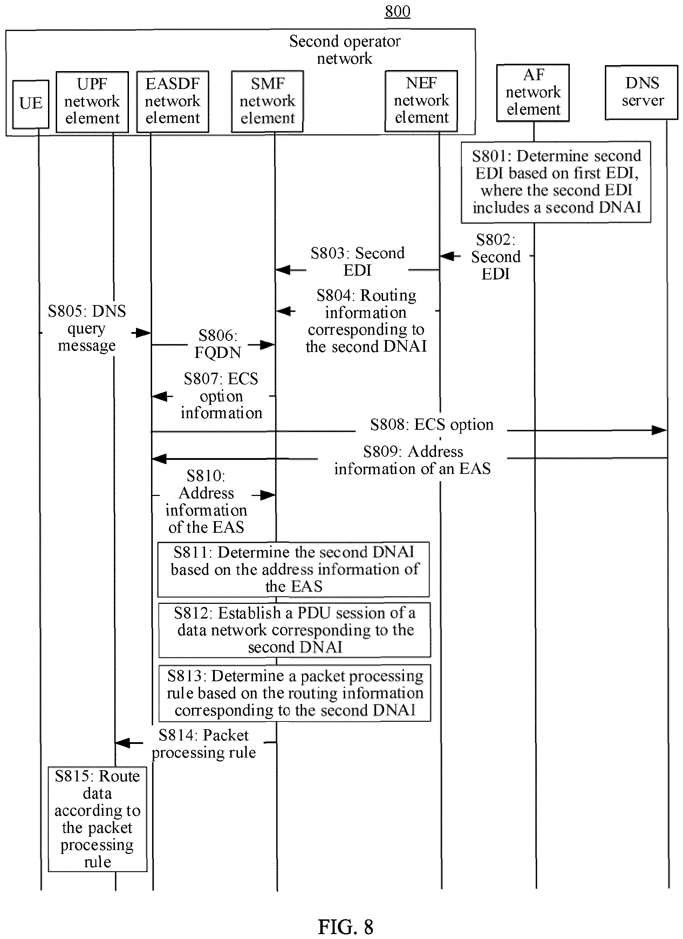

In the embodiment shown in FIG. 7, the NEF network element of the first operator network may convert the first EDI of the first operator network into the second EDI, and send the second EDI to the NEF network element of the second operator network. UE of the second operator network in which no edge application server is deployed may access, by using the second EDI in the communication method in FIG. 7 in this embodiment of this application, an edge application server deployed in the first operator network, so that accessing the edge application server across operator networks can be implemented. In some embodiments, the AF network element may convert the first EDI into the second EDI. The following describes a communication method 800 with reference to an embodiment shown in FIG. 8. As shown in FIG. 8, a first core network element is an AF network element. The communication method 800 includes the following steps.

S801: The AF network element determines second EDI based on first EDI, where the second EDI includes a second DNAI.

The first EDI includes a first DNAI.

The first EDI is first EDI of a first operator network.

In the communication method 800, an edge application server is deployed in the first operator network.

A principle in which the AF network element determines the second EDI based on the first EDI is the same as a principle in which the NEF network element determines the second EDI based on the first EDI in S502. To avoid repetition, details are not described in this embodiment of this application.

It should be noted that a correspondence that is between the first DNAI and the second DNAI and that is used by the AF network element in a process of determining the second EDI based on the first EDI may be stored in the AF network element, or may be obtained by the AF network element from another network element, for example, may be obtained by the AF network element from a NEF network element of the first operator network. A manner in which the AF network element obtains the correspondence between the first DNAI and the second DNAI is not limited in this embodiment of this application.

It may be understood that S801 is an optional step. To be specific, the AF network element may not determine the second EDI based on the first EDI, and the AF network element may obtain the second EDI from another network element.

Optionally, the AF network element may obtain routing information corresponding to the second DNAI, where the second EDI includes the second DNAI. The second DNAI included in the second EDI has a correspondence with the routing information corresponding to the second DNAI. A manner in which the AF network element obtains the routing information corresponding to the second DNAI is similar to an obtaining manner of the NEF network element in the communication method 500. To avoid repetition, details are not described.

Optionally, the AF network element may send the routing information corresponding to the second DNAI to a NEF network element of a second operator network.

S802: The AF network element sends the second EDI to the NEF network element of the second operator network, and the NEF network element of the second operator network receives the second EDI from the AF network element.

Optionally, the second EDI in S802 may include the second DNAI and the routing information corresponding to the second DNAI. The AF network element may send the routing information corresponding to the second DNAI to the NEF network element of the second operator network as a part of the second EDI. In this case, the AF network element does not need to separately send the routing information corresponding to the second DNAI to the NEF network element of the second operator network.

Optionally, the AF network element may separately send the second EDI and the routing information corresponding to the second DNAI, and the NEF network element of the second operator network may separately receive the second EDI and the routing information corresponding to the second DNAI. The second EDI does not include the routing information corresponding to the second DNAI, and the second EDI has a correspondence with the routing information corresponding to the second DNAI. In other words, when the NEF network element of the second operator network separately receives the second EDI and the routing information corresponding to the second DNAI, the second EDI has the correspondence with the routing information corresponding to the second DNAI. Specifically, that the second EDI has the correspondence with the routing information corresponding to the second DNAI may be that the second DNAI included in the second EDI has the correspondence with the routing information corresponding to the second DNAI. For example, if the second EDI includes a DNAI 1, the NEF network element of the second operator network also needs to receive routing information corresponding to the DNAI 1.

S803: The NEF network element of the second operator network sends the second EDI to an SMF network element of the second operator network.

Optionally, if in S802, the routing information corresponding to the second DNAI may be sent to the NEF network element of the second operator network as a part of the second EDI, in S803, the second EDI sent by the NEF network element of the second operator network to the SMF network element of the second operator network may also include the routing information corresponding to the second DNAI.

Optionally, if in S802, the AF network element may separately send the second EDI and the routing information corresponding to the second DNAI, and the NEF network element of the second operator network may separately receive the second EDI and the routing information corresponding to the second DNAI, the second EDI in S803 may not include the routing information corresponding to the second DNAI. In addition, S804 may be included.

S804: The NEF network element of the second operator network sends the routing information corresponding to the second DNAI of the second operator network to the SMF network element of the second operator network.

For descriptions of the routing information corresponding to the second DNAI, refer to the descriptions of the communication method 500.

Optionally, the NEF network element of the second operator network may store the routing information corresponding to the second DNAI of the second operator network. A manner in which the NEF network element of the second operator network determines the routing information corresponding to the second DNAI is similar to that in the case 1 in S502. Details are not described in this embodiment of this application. In this case, the AF network element does not send the routing information corresponding to the second DNAI.

Optionally, the NEF network element of the second operator network may obtain the routing information corresponding to the second DNAI of the second operator network from another network element. A manner in which the NEF network element of the second operator network obtains the routing information corresponding to the second DNAI of the second operator network from another network element is similar to that in the case 2 in S502. Details are not described in this embodiment of this application.

Optionally, S804 may alternatively not be included. The SMF network element may locally store the routing information corresponding to the second DNAI of the second operator network, and does not need to obtain the routing information corresponding to the second DNAI of the second operator network from the NEF network element of the second operator network. A manner in which the SMF network element of the second operator network determines the routing information corresponding to the second DNAI is similar to that in the case 1 in S502. Details are not described in this embodiment of this application.

S805 to S815 are respectively the same as S505 to S515.

It should be noted that UE, a UPF network element, an EASDF network element, the SMF network element, and the NEF network element shown in FIG. 8 belong to the second operator network.

In the embodiment shown in FIG. 8, the AF network element may determine the second EDI based on the first EDI. The UE of the second operator network in which no edge application server is deployed may access, by using the second EDI in the communication method in FIG. 7 in this embodiment of this application, the edge application server deployed in the first operator network, so that accessing the edge application server across operator networks can be implemented.

The foregoing describes the method embodiments provided in this application, and the following describes apparatus embodiments provided in this application. It should be understood that the descriptions of the apparatus embodiments correspond to the descriptions of the method embodiments. Therefore, for content that is not described in detail, refer to the foregoing method embodiments. For brevity, details are not described herein again.

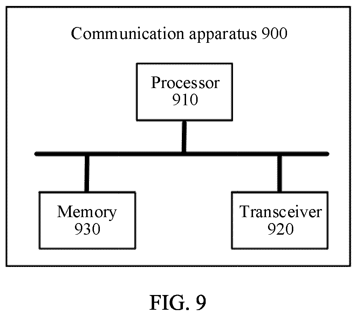

FIG. 9 shows a communication apparatus 900 according to an embodiment of this application. The communication apparatus 900 includes a processor 910 and a transceiver 920. The processor 910 and the transceiver 920 communicate with each other through an internal connection path. The processor 910 is configured to execute instructions to control the transceiver 920 to send a signal and/or receive a signal.

Optionally, the communication apparatus 900 may further include a memory 930. The memory 930, the processor 910, and the transceiver 920 communicate with each other through the internal connection path. The memory 930 is configured to store the instructions. The processor 910 may execute the instructions stored in the memory 930. In a possible implementation, the communication apparatus 900 is configured to implement procedures and steps corresponding to the NEF network element in the foregoing method embodiments. In another possible implementation, the communication apparatus 900 is configured to implement procedures and steps corresponding to the SMF network element in the foregoing method embodiments. In still another possible implementation, the communication apparatus 900 is configured to implement procedures and steps corresponding to the AF network element in the foregoing method embodiments.

It should be understood that the communication apparatus 900 may specifically be the NEF network element, the SMF network element, or the AF network element in the foregoing embodiments, or may be a chip or a chip system. Correspondingly, the transceiver 920 may be a transceiver circuit of the chip. This is not limited herein. Specifically, the communication apparatus 900 may be configured to perform the steps and/or the procedures corresponding to the NEF network element, the SMF network element, or the AF network element in the foregoing method embodiments. Optionally, the memory 930 may include a read-only memory and a random access memory, and provide instructions and data for the processor. A part of the memory may further include a non-volatile random access memory. For example, the memory may further store information about a device type. The processor 910 may be configured to execute the instructions stored in the memory; and when the processor 910 executes the instructions stored in the memory, the processor 910 is configured to perform the steps and/or the procedures of the foregoing method embodiments corresponding to the NEF network element, the SMF network element, or the AF network element.

In an implementation process, the steps in the foregoing methods may be implemented by using a hardware integrated logic circuit in the processor or by using instructions in a form of software. The steps in the methods disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, the steps in the foregoing method embodiments may be implemented by using a hardware integrated logic circuit in the processor or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, steps, and logical block diagrams that are disclosed in embodiments of this application may be implemented or performed. The general-purpose processor may be a microprocessor, or the processor may be any conventional processor or the like. The steps in the methods disclosed with reference to embodiments of this application may be directly performed by a hardware decoding processor, or may be performed by a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but is not limited to these memories and any memory of another appropriate type.

According to the methods provided in embodiments of this application, this application further provides a computer program product. The computer program product includes computer program code. When the computer program code is run on a computer, the computer is enabled to perform the steps or the procedures performed by the NEF network element, the SMF network element, or the AF network element in the foregoing method embodiments.

According to the methods provided in embodiments of this application, this application further provides a computer-readable storage medium. The computer-readable storage medium stores program code. When the program code is run on a computer, the computer is enabled to perform the steps or the procedures performed by the NEF network element, the SMF network element, or the AF network element in the foregoing method embodiments.

According to the methods provided in embodiments of this application, this application further provides a communication system. The communication system includes one or more of the following network elements: the foregoing NEF network element, the foregoing SMF network element, and the foregoing AF network element.

The foregoing apparatus embodiments completely correspond to the method embodiments. A corresponding module or unit performs a corresponding step. For example, a communication unit (transceiver) performs a receiving step or a sending step in the method embodiments, and a step other than the sending step and the receiving step may be performed by a processing unit (processor). For a function of a specific unit, refer to a corresponding method embodiment. There may be one or more processors.

In this application, an "indication" may include a direct indication and an indirect indication, or may include an explicit indication and an implicit indication. Information indicated by specific information is referred to as to-be-indicated information. In a specific implementation process, the to-be-indicated information may be indicated in many manners. For example, without limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

In embodiments of this application, the terms and English abbreviations are all examples given for ease of description, and should not constitute any limitation on this application. This application does not exclude a possibility of defining another term that can implement a same or similar function in an existing or a future protocol.

It should be understood that the term "and/or" in this specification describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects.

A person of ordinary skill in the art may be aware that various illustrative logical blocks (illustrative logical blocks) and steps (steps) described with reference to embodiments disclosed in this specification may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for specific working processes of the foregoing described system, apparatus, and unit, refer to corresponding processes in the foregoing method embodiments. Details are not described herein again.

In several embodiments provided in this application, it should be understood that the disclosed system, apparatus, and method may be implemented in another manner. For example, the described apparatus embodiments are merely examples. For example, division into the units is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, that is, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or some of the functions of the functional units may be implemented by software, hardware, firmware, or any combination thereof. When software is used to implement embodiments, all or some of embodiments may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the communication method is applied to a first core network element, and the communication method comprises:
receiving first edge application server deployment information, wherein the first edge application server deployment information comprises a first data network access identifier of a first operator network; and
determining second edge application server deployment information based on the first edge application server deployment information, wherein the second edge application server deployment information comprises a second data network access identifier of a second operator network.

2. The communication method according to claim 1, wherein the determining second edge application server deployment information based on the first edge application server deployment information comprises:
determining, based on a correspondence between the first data network access identifier and the second data network access identifier, the second data network access identifier corresponding to the first data network access identifier.

3. The communication method according to claim 2, wherein the correspondence between the first data network access identifier and the second data network access identifier is configured in the first core network element.

4. The communication method according to claim 2 or 3, wherein the communication method further comprises:
determining the correspondence between the first data network access identifier and the second data network access identifier based on first identification information, wherein
the first identification information is identification information of a public land mobile network PLMN corresponding to the first operator network, an identifier of the first operator network, identification information of an edge computing platform on which an edge application server of the first operator network is located, identification information of a data network corresponding to the edge application server of the first operator network, or identification information of an application function service corresponding to the edge application server.

5. The communication method according to claim 4, wherein the communication method further comprises:
receiving the first identification information corresponding to the first edge application server deployment information.

6. The communication method according to any one of claims 1 to 5, wherein the first edge application server deployment information further comprises at least one of the following: a first fully qualified domain name FQDN, first address range information of the edge application server, and identification information of a first domain name system DNS server; and
the second edge application server deployment information further comprises at least one of the following: the first FQDN, the first address range information, and the identification information of the first DNS server.

7. The communication method according to any one of claims 1 to 6, wherein the first core network element is a network exposure function network element of the first operator network or a network exposure function network element of the second operator network, and the communication method further comprises:
sending the second edge application server deployment information to a session management function network element of the second operator network and/or a data management network element of the second operator network.

8. The communication method according to claim 7, wherein
the second edge application server deployment information comprises routing information corresponding to the second data network access identifier, or the communication method further comprises:
sending the routing information corresponding to the second data network access identifier to the session management function network element of the second operator network and/or the data management network element of the second operator network.

9. The communication method according to claim 8, wherein the communication method further comprises:
receiving, by the session management function network element, the second edge application server deployment information, wherein the second edge application server deployment information comprises the routing information corresponding to the second data network access identifier; or
receiving, by the session management function network element, the second edge application server deployment information and the routing information corresponding to the second data network access identifier.

10. The communication method according to claim 9, wherein the communication method further comprises:
obtaining, by the session management function network element, an address of an edge application server corresponding to a service accessed by a terminal device;
determining, by the session management function network element, the second data network access identifier based on the address of the edge application server;
determining, by the session management function network element based on the routing information corresponding to the second data network access identifier, a packet processing rule corresponding to the service; and
sending, by the session management function network element, the packet processing rule to a user plane function network element of the second operator network.

11. The communication method according to any one of claims 1 to 6, wherein the first core network element is a session management function network element of the second operator network.

12. A communication method, wherein the communication method is applied to a session management function network element, and the communication method comprises:
obtaining routing information corresponding to a second data network access identifier;
obtaining an address of an edge application server corresponding to a service accessed by a terminal device;
determining the second data network access identifier based on the address of the edge application server;
determining, based on the second data network access identifier and the routing information corresponding to the second data network access identifier, a packet processing rule corresponding to the service; and
sending the packet processing rule to a user plane function network element.

13. The communication method according to claim 12, wherein the obtaining routing information corresponding to a second data network access identifier comprises:
receiving second edge application server deployment information of a second operator network from a network exposure function network element, wherein the second edge application server deployment information comprises the second data network access identifier, the routing information corresponding to the second data network access identifier, and first address range information corresponding to the second data network access identifier, wherein
the determining the second data network access identifier based on the address of the edge application server comprises:
if the address of the edge application server is within an address range indicated by the first address range information, determining the second data network access identifier corresponding to the first address range information.

14. The communication method according to claim 12, wherein the obtaining routing information corresponding to a second data network access identifier comprises:
receiving the routing information corresponding to the second data network access identifier from a network exposure function network element; and
the communication method further comprises:
receiving second edge application server deployment information of a second operator network from the network exposure function network element, wherein the second edge application server deployment information comprises the second data network access identifier and first address range information corresponding to the second data network access identifier, wherein
the determining the second data network access identifier based on the address of the edge application server comprises:
if the address of the edge application server is within an address range indicated by the first address range information, determining the second data network access identifier that corresponds to the first address range information and that is in the second edge application server deployment information.

15. The communication method according to any one of claims 12 to 14, wherein before the obtaining an address of an edge application server corresponding to a service accessed by a terminal device, the communication method further comprises:
determining client subnet option information based on location information of the terminal device, wherein the client subnet option information is used to determine the address of the edge application server corresponding to the service accessed by the terminal device; and
sending the client subnet option information.

16. A communication method, wherein the communication method is applied to an application function network element, and comprises:
sending second edge application server deployment information of a second operator network, wherein the second edge application server deployment information comprises a second data network access identifier and routing information corresponding to the second data network access identifier.

17. The communication method according to claim 16, wherein the communication method further comprises:
determining, based on a first data network access identifier in first edge application server deployment information, the second data network access identifier in the second edge application server deployment information.

18. The communication method according to claim 17, wherein the determining, based on a first data network access identifier in first edge application server deployment information, the second data network access identifier in the second edge application server deployment information comprises:
determining, based on a correspondence between the first data network access identifier and the second data network access identifier, the second data network access identifier corresponding to the first data network access identifier.

19. The communication method according to any one of claims 16 to 18, wherein the sending second edge application server deployment information comprises:
sending the second edge application server deployment information to a network exposure function network element of a first operator network.

20. The communication method according to any one of claims 16 to 18, wherein the sending second edge application server deployment information comprises:
sending the second edge application server deployment information to a network exposure function network element of the second operator network.

21. A communication apparatus, wherein the communication apparatus comprises:
a transceiver unit, configured to receive first edge application server deployment information, wherein the first edge application server deployment information comprises a first data network access identifier of a first operator network; and
a processing unit, configured to determine second edge application server deployment information based on the first edge application server deployment information, wherein the second edge application server deployment information comprises a second data network access identifier of a second operator network.

22. The communication apparatus according to claim 21, wherein the processing unit is specifically configured to:
determine, based on a correspondence between the first data network access identifier and the second data network access identifier, the second data network access identifier corresponding to the first data network access identifier.

23. The communication apparatus according to claim 22, wherein the correspondence between the first data network access identifier and the second data network access identifier is configured in the communication apparatus.

24. The communication apparatus according to claim 21 or 22, wherein the processing unit is further configured to:
determine the correspondence between the first data network access identifier and the second data network access identifier based on first identification information, wherein
the first identification information is identification information of a public land mobile network PLMN corresponding to the first operator network, an identifier of the first operator network, identification information of an edge computing platform on which an edge application server of the first operator network is located, identification information of a data network corresponding to the edge application server of the first operator network, or identification information of an application function service corresponding to the edge application server.

25. The communication apparatus according to claim 24, wherein the transceiver unit is further configured to:
receive the first identification information corresponding to the first edge application server deployment information.

26. The communication apparatus according to any one of claims 21 to 25, wherein the first edge application server deployment information further comprises at least one of the following: a first fully qualified domain name FQDN, first address range information of the edge application server, and identification information of a first domain name system DNS server; and
the second edge application server deployment information further comprises at least one of the following: the first FQDN, the first address range information, and the identification information of the first DNS server.

27. The communication apparatus according to any one of claims 21 to 26, wherein the communication apparatus is a network exposure function network element of the first operator network or a network exposure function network element of the second operator network, and the transceiver unit is further configured to:
send the second edge application server deployment information to a session management function network element of the second operator network and/or a data management network element of the second operator network.

28. The communication apparatus according to claim 27, wherein
the second edge application server deployment information comprises routing information corresponding to the second data network access identifier, or the transceiver unit is further configured to:
send the routing information corresponding to the second data network access identifier to the session management function network element of the second operator network and/or the data management network element of the second operator network.

29. The communication apparatus according to any one of claims 21 to 28, wherein the communication apparatus is the session management function network element of the second operator network.

30. A communication apparatus, comprising a unit configured to perform the communication method according to any one of claims 12 to 15.

31. A communication apparatus, comprising a unit configured to perform the communication method according to any one of claims 16 to 20.

32. A communication apparatus, comprising a processor, wherein the processor is coupled to a memory, and the processor is configured to execute a computer program or instructions stored in the memory, to enable the electronic device to implement the communication method according to any one of claims 1 to 11.

33. A communication apparatus, comprising a processor, wherein the processor is coupled to a memory, and the processor is configured to execute a computer program or instructions stored in the memory, to enable the communication apparatus to implement the communication method according to any one of claims 12 to 15.

34. A communication apparatus, comprising a processor, wherein the processor is coupled to a memory, and the processor is configured to execute a computer program or instructions stored in the memory, to enable the communication apparatus to implement the communication method according to any one of claims 16 to 20.

35. A communication system, comprising at least two communication apparatuses of the communication apparatus according to any one of claims 21 to 29, the communication apparatus according to claim 30, or the communication apparatus according to claim 31, or comprising at least two communication apparatuses of the communication apparatus according to claim 32, the communication apparatus according to claim 33, or the communication apparatus according to claim 34.

36. A computer-readable storage medium, wherein the computer-readable storage medium stores computer instructions; and when the computer instructions are run on a communication apparatus, the communication apparatus is enabled to perform the communication method according to any one of claims 1 to 11.

37. A computer-readable storage medium, wherein the computer-readable storage medium stores computer instructions; and when the computer instructions are run on a communication apparatus, the communication apparatus is enabled to perform the communication method according to any one of claims 12 to 15.

38. A computer-readable storage medium, wherein the computer-readable storage medium stores computer instructions; and when the computer instructions are run on a communication apparatus, the communication apparatus is enabled to perform the communication method according to any one of claims 16 to 20.
